(19) Europäisches Patentamt
European Patent Office
Office européen des brevets

(11) **EP 4 780 036 A1**

(12) **EUROPEAN PATENT APPLICATION**
published in accordance with Art. 153(4) EPC

(43) Date of publication:
**22.07.2026 Bulletin 2026/30**

(21) Application number: **24870508.9**

(22) Date of filing: **14.09.2024**

(51) International Patent Classification (IPC):
**H04W 12/041** (2021.01)

(52) Cooperative Patent Classification (CPC):
**H04W 12/041; H04W 60/00**

(86) International application number:
**PCT/CN2024/119216**

(87) International publication number:
**WO 2025/066964 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023 CN 202311260044**

(71) Applicant: **HUAWEI TECHNOLOGIES CO., LTD.
Shenzhen, Guangdong 518129 (CN)**

(72) Inventors:
• **GUO, Yanfei**
  **Shenzhen, Guangdong 518129 (CN)**
• **WU, Yizhuang**
  **Shenzhen, Guangdong 518129 (CN)**

(74) Representative: **Körber, Martin Hans
Mitscherlich PartmbB
Karlstraße 7
80333 München (DE)**

(54) **KEY DEDUCTION METHOD AND APPARATUS**

(57) A key derivation method and an apparatus are provided, which relate to the communication field. In the method, an access and mobility management network element receives a first registration request message from a terminal device, where the first registration request message is used by the terminal device to request to register to a network over a first 3GPP access; generates a first key; and sends the first key to a first access network device, where the first key is a key used for communication between the terminal device and the first access network device. The access and mobility management network element further receives a second registration request message from the terminal device, where the second registration request message is used by the terminal device to request to register to the network over a second 3GPP access; generates a second key, where the second key is a key used for communication between the terminal device and a second access network device; and sends the second key to the second access network device, where the first key is different from the second key. According to the foregoing method, two different keys are generated for two 3GPP accesses, so that key isolation can be achieved.

FIG. 5

**Description**

CROSS-REFERENCE TO RELATED APPLICATIONS

This application claims priority to Chinese Patent Application No. 202311260044.3, filed with the China National Intellectual Property Administration on September 26, 2023 and entitled "KEY DERIVATION METHOD AND APPARATUS", which is incorporated herein by reference in its entirety.

TECHNICAL FIELD

This application relates to the field of communication technologies, and in particular, to a key derivation method and an apparatus.

BACKGROUND

At present, a terminal device may register to a same access and mobility management function (access and mobility management function, AMF) network element over a 3rd generation partnership project (3rd generation partnership project, 3GPP) access and a non-3GPP access, for connection to a same public land mobile network (public land mobile network, PLMN).

Specifically, when a terminal device is connected to a same PLMN over a 3GPP access and a non-3GPP access, the terminal device may perform primary authentication with the AMF network element only once, to maintain a common security context. For the 3GPP access, the terminal device registers to the AMF via a next generation NodeB (next generation NodeB, gNB) in a 5G mobile communication system. For the non-3GPP access, the terminal device also registers to the AMF via a non-3GPP interworking function (Non-3GPP InterWorking Function, N3IWF) network element. Therefore, the AMF separately maintains parameters for NAS connections for the 3GPP access and the non-3GPP access, to achieve secure isolation between the two accesses.

However, when the terminal device is connected to a same PLMN over two 3GPP accesses, there is no corresponding key derivation solution.

SUMMARY

This application provides a key derivation method and an apparatus, to resolve a problem of how to derive a key when a terminal device is connected to a same PLMN over two 3GPP accesses.

According to a first aspect, this application provides a key derivation method. The method may be performed by an access and mobility management network element or a module (for example, a chip) in the access and mobility management network element. The method includes: receiving a first registration request message from a terminal device, where the first registration request message is used by the terminal device to request to register to a network over a first 3rd generation partnership project 3GPP access; generating a first key, where the first key is a key used for communication between the terminal device and a first access network device, and the first access network device is used for the first 3GPP access; sending the first key to the first access network device; receiving a second registration request message from the terminal device, where the second registration request message is used by the terminal device to request to register to the network over a second 3GPP access; generating a second key, where the second key is a key used for communication between the terminal device and a second access network device, the second access network device is used for the second 3GPP access, and the first key is different from the second key; and sending the second key to the second access network device. According to the foregoing method, when the terminal device registers to a same access and mobility management network element over two 3GPP accesses, the access and mobility management network element generates two different keys for the two 3GPP accesses. In other words, the key used for communication between the terminal device and the first access network device is different from the key used for communication between the terminal device and the second access network device, so that key isolation can be achieved, thereby ensuring communication security.

In a possible design, the first registration request message and/or the second registration request message include/includes indication information, and the indication information indicates that the terminal device is to be connected to the network over two 3GPP accesses.

According to the foregoing design, the access and mobility management network element may determine, based on the indication information, that the terminal device is connected to the network over two 3GPP accesses. The two 3GPP accesses may alternatively be replaced with multiple 3GPP accesses.

In a possible design, during generation of the first key, the first key is generated based on a first access type distinguisher corresponding to the first 3GPP access; and during generation of the second key, the second key is generated based on a second access type distinguisher corresponding to the second 3GPP access, where the first access type distinguisher is different from the second access type distinguisher.

According to the foregoing design, different access type distinguishers are used in two 3GPP access processes, so that it can be ensured that the first key is different from the second key, thereby achieving key isolation.

In a possible design, the second registration request message includes the indication information; and before the second key is generated, the second access type distinguisher is determined for the second 3GPP access based on the indication information.

According to the foregoing design, the access and mobility management network element may determine, based on the indication information, that the terminal device is connected to the network over two 3GPP accesses, to further determine, for the second 3GPP access, the second access type distinguisher that is different from the first access type distinguisher.

In a possible design, the first registration request message includes the indication information; before the first key is generated, the first access type distinguisher is determined for the first 3GPP access based on the indication information, where the first access type distinguisher is one distinguisher in a dual-3GPP access type distinguisher; and before the second key is generated, the second access type distinguisher is determined for the second 3GPP access, where the second access type distinguisher is another distinguisher in the dual-3GPP access type distinguisher.

According to the foregoing design, the access and mobility management network element may determine, based on the indication information, that the terminal device is connected to the network over two 3GPP accesses, to further use one distinguisher in the dual-3GPP access type distinguisher as the first access type distinguisher, and use the another distinguisher in the dual-3GPP access type distinguisher as the second access type distinguisher, so that the first access type distinguisher is different from the second access type distinguisher.

In a possible design, the second access type distinguisher is an unused distinguisher in the dual-3GPP access type distinguisher.

In a possible design, a first registration accept message is sent to the terminal device, where the first registration accept message includes the first access type distinguisher; and/or a second registration accept message is sent to the terminal device, where the second registration accept message includes the second access type distinguisher.

According to the foregoing design, the terminal device may obtain the first access type distinguisher based on the first registration accept message, and obtain the second access type distinguisher based on the second registration accept message.

In a possible design, a first bearer parameter includes the first access type distinguisher, and a second bearer parameter includes the second access type distinguisher; security protection is performed on first NAS signaling by using a NAS security protection key and the first bearer parameter, where the first NAS signaling corresponds to the first 3GPP access; and security protection is performed on second NAS signaling by using the NAS security protection key and the second bearer parameter, where the second NAS signaling corresponds to the second 3GPP access.

According to the foregoing manner, different bearer parameters are used to avoid a problem that a key stream is reused because the two 3GPP accesses use a same NAS security protection key.

In a possible design, during generation of the first key, the first key is generated based on a third access type distinguisher and an identifier of the first 3GPP access, where the third access type distinguisher indicates that an access type is 3GPP access; and during generation of the second key, the second key is generated based on the third access type distinguisher and an identifier of the second 3GPP access, where the identifier of the first 3GPP access is different from the identifier of the second 3GPP access.

According to the foregoing method, new identifiers are provided for different 3GPP accesses in two 3GPP access processes, so that it can be ensured that the first key is different from the second key, thereby achieving key isolation.

In a possible design, the first registration request message includes the indication information; before the first key is generated, the identifier of the first 3GPP access is determined for the first 3GPP access based on the indication information; and before the second key is generated, the identifier of the second 3GPP access is determined for the second 3GPP access.

According to the foregoing design, the access and mobility management network element may determine, based on the indication information, that the terminal device is connected to the network over two 3GPP accesses, to further determine the identifier of the first 3GPP access for the first 3GPP access, and determine the identifier of the second 3GPP access for the second 3GPP access.

In a possible design, when the identifier of the first 3GPP access is determined for the first 3GPP access based on the indication information, two 3GPP access identifiers are obtained from a data management network element based on the indication information; one of the two 3GPP identifiers is used as the identifier of the first 3GPP access; and when the identifier of the second 3GPP access is determined for the second 3GPP access, the other one of the two 3GPP identifiers is used as the identifier of the second 3GPP access.

According to the foregoing method, the access and mobility management network element may obtain two pre-configured 3GPP access identifiers from the data management network element based on the indication information, and use the two 3GPP access identifiers as the identifier of the first 3GPP access and the identifier of the second 3GPP access respectively.

In a possible design, a first registration accept message is sent to the terminal device, where the first registration accept message includes the identifier of the first 3GPP access; and a second registration accept message is sent to the terminal device, where the second registration accept message includes the identifier of the second 3GPP access.

According to the foregoing design, the terminal device may obtain the identifier of the first 3GPP access based on the first registration accept message, and obtain the identifier of the second 3GPP access based on the second registration accept message.

In a possible design, the first registration request message includes the identifier of the first 3GPP access, and the second registration request message includes the identifier of the second 3GPP access.

According to the foregoing design, the terminal device may provide the identifier of the first 3GPP access and the identifier of the second 3GPP access.

In a possible design, a first bearer parameter corresponds to the identifier of the first 3GPP access, and a second bearer parameter corresponds to the identifier of the second 3GPP access; security protection is performed on first NAS signaling by using a NAS security protection key and the first bearer parameter, where the first NAS signaling corresponds to the first 3GPP access; and security protection is performed on second NAS signaling by using the NAS security protection key and the second bearer parameter, where the second NAS signaling corresponds to the second 3GPP access.

According to the foregoing design, different bearer parameters are used to avoid a problem that a key stream is reused because the two 3GPP accesses use a same NAS security protection key.

In a possible design, during generation of the first key, the first key is generated based on a first value of an uplink NAS counter; and during generation of the second key, the second key is generated based on a second value of the uplink NAS counter, where the first 3GPP access and the second 3GPP access share the uplink NAS counter, and the first value is different from the second value.

According to the foregoing design, different values of a same uplink NAS counter are used in two 3GPP access processes, so that it can be ensured that the first key is different from the second key, thereby achieving key isolation.

According to a second aspect, this application provides a key derivation method. The method may be performed by a terminal device or a module (for example, a chip) in the terminal device. The method includes: sending a first registration request message to an access and mobility management network element, where the first registration request message is used by the terminal device to request to register to a network over a first 3GPP access; generating a first key, where the first key is a key used for communication between the terminal device and a first access network device, and the first access network device is used for the first 3GPP access; sending a second registration request message to the access and mobility management network element, where the second registration request message is used by the terminal device to request to register to the network over a second 3GPP access; and generating a second key, where the second key is a key used for communication between the terminal device and a second access network device, the second access network device is used for the second 3GPP access, and the first key is different from the second key.

According to the foregoing method, when the terminal device registers to a same access and mobility management network element over two 3GPP accesses, the terminal device generates two different keys for the two 3GPP accesses. In other words, the key used for communication between the terminal device and the first access network device is different from the key used for communication between the terminal device and the second access network device, so that key isolation can be achieved, thereby ensuring communication security.

In a possible design, the first registration request message and/or the second registration request message include/includes indication information, and the indication information indicates that the terminal device is to be connected to the network over two 3GPP accesses.

According to the foregoing design, the terminal device may notify, by using the indication information, the access and mobility management network element that the terminal device is connected to the network over two 3GPP accesses. The two 3GPP accesses may alternatively be replaced with multiple 3GPP accesses.

In a possible design, during generation of the first key, the first key is generated based on a first access type distinguisher corresponding to the first 3GPP access; and during generation of the second key, the second key is generated based on a second access type distinguisher corresponding to the second 3GPP access, where the first access type distinguisher is different from the second access type distinguisher.

According to the foregoing design, different access type distinguishers are used in two 3GPP access processes, so that it can be ensured that the first key is different from the second key, thereby achieving key isolation.

In a possible design, before the first key is generated, the first access type distinguisher is determined for the first 3GPP access, where the first access type distinguisher is one distinguisher in a dual-3GPP access type distinguisher; and before the second key is generated, the second access type distinguisher is determined for the second 3GPP access, where the second access type distinguisher is another distinguisher in the dual-3GPP access type distinguisher.

In a possible design, the second access type distinguisher is an unused distinguisher in the dual-3GPP access type distinguisher.

In a possible design, a first registration accept message is received from the access and mobility management network element, where the first registration accept message includes the first access type distinguisher; and/or a second registration accept message is received from the access and mobility management network element, where the first registration accept message includes the second access type distinguisher.

According to the foregoing design, the terminal device may obtain the first access type distinguisher through the first registration accept message, and/or obtain the second access type distinguisher through the second registration accept message. In other words, the terminal device obtains the first access type distinguisher and/or the second access type distinguisher from the access and mobility management network element.

In a possible design, a first AS security mode command is received from the first access network device, where the first AS security mode command includes the first access type distinguisher; and/or a second AS security mode command is received from the second access network device, where the second AS security mode command includes the second access type distinguisher.

According to the foregoing design, the terminal device may obtain the first access type distinguisher through the first AS security mode command, and/or obtain the second access type distinguisher through the second AS security mode command. In other words, the terminal device obtains the first access type distinguisher from the first access network device, and/or obtains the second access type distinguisher from the second access network device.

In a possible design, a first bearer parameter includes the first access type distinguisher, and a second bearer parameter includes the second access type distinguisher; security protection is performed on first NAS signaling by using a NAS security protection key and the first bearer parameter, where the first NAS signaling corresponds to the first 3GPP access; and security protection is performed on second NAS signaling by using the NAS security protection key and the second bearer parameter, where the second NAS signaling corresponds to the second 3GPP access.

According to the foregoing manner, different bearer parameters are used to avoid a problem that a key stream is reused because the two 3GPP accesses use a same NAS security protection key.

In a possible design, during generation of the first key, the first key is generated based on a third access type distinguisher and an identifier of the first 3GPP access, where the third access type distinguisher indicates that an access type is 3GPP access; and during generation of the second key, the second key is generated based on the third access type distinguisher and an identifier of the second 3GPP access, where the identifier of the first 3GPP access is different from the identifier of the second 3GPP access.

According to the foregoing method, new identifiers are provided for different 3GPP accesses in two 3GPP access processes, so that it can be ensured that the first key is different from the second key, thereby achieving key isolation.

In a possible design, before the first key is generated, the identifier of the first 3GPP access is determined for the first 3GPP access; and before the second key is generated, the identifier of the second 3GPP access is determined for the second 3GPP access.

In a possible design, a first registration accept message from the access and mobility management network element is received, where the first registration accept message includes the identifier of the first 3GPP access; and/or a second registration accept message sent from the access and mobility management network element is received, where the second registration accept message includes the identifier of the second 3GPP access.

According to the foregoing design, the terminal device may obtain the identifier of the first 3GPP access through the first registration accept message, and/or obtain the identifier of the second 3GPP access through the second registration accept message. In other words, the terminal device may obtain the identifier of the first 3GPP access and/or the identifier of the second 3GPP access from the access and mobility management network element.

In a possible design, a first AS security mode command is received from the first access network device, where the first AS security mode command includes the identifier of the first 3GPP access; and/or a second AS security mode command is received from the second access network device, where the second AS security mode command includes the identifier of the second 3GPP access.

According to the foregoing design, the terminal device may obtain the identifier of the first 3GPP access through the first AS security mode command, and/or obtain the identifier of the second 3GPP access through the second AS security mode command. In other words, the terminal device obtains the identifier of the second 3GPP access from the first access network device, and/or obtains the identifier of the second 3GPP access from the second access network device.

In a possible design, the first registration request message includes the identifier of the first 3GPP access, and the second registration request message includes the identifier of the second 3GPP access.

According to the foregoing design, the terminal device may provide the identifier of the first 3GPP access and the identifier of the second 3GPP access.

In a possible design, a first bearer parameter corresponds to the identifier of the first 3GPP access, and a second bearer parameter corresponds to the identifier of the second 3GPP access; security protection is performed on first NAS signaling by using a NAS security protection key and the first bearer parameter, where the first NAS signaling corresponds to the first 3GPP access; and security protection is performed on second NAS signaling by using the NAS security protection key and the second bearer parameter, where the second NAS signaling corresponds to the second 3GPP access.

In a possible design, during generation of the first key, the first key is generated based on a first value of an uplink NAS counter; and during generation of the second key, the second key is generated based on a second value of the uplink NAS counter, where the first 3GPP access and the second 3GPP access share the uplink NAS counter, and the first value is different from the second value.

According to the foregoing design, different values of a same uplink NAS counter are used in two 3GPP access processes, so that it can be ensured that the first key is different from the second key, thereby achieving key isolation.

According to a third aspect, this application provides a communication apparatus. The apparatus includes a unit configured to perform the method according to any one of the foregoing aspects.

According to a fourth aspect, this application provides a communication device, including at least one processing element and at least one storage element. The at least one storage element is configured to store a program and data. The at least one processing element is configured to read and execute the program and the data that are stored in the storage element, so that the method according to any one of the foregoing aspects of this application is implemented.

According to a fifth aspect, this application further provides a computer program. When the computer program is run on a computer, the computer is caused to perform the method according to any one of the foregoing aspects.

According to a sixth aspect, this application provides a communication apparatus. The apparatus includes an interface circuit. The interface circuit is configured to provide input and/or output of a program or instructions for at least one processor. The at least one processor is configured to execute the program or the instructions, so that the communication apparatus can implement the method according to any one of the foregoing aspects.

In a possible manner, the communication apparatus includes the at least one processor.

In a possible manner, the communication apparatus includes at least one memory.

According to a seventh aspect, this application provides a computer storage medium. The storage medium stores a software program, and when the software program is read and executed by one or more processors, the method according to any one of the foregoing aspects may be implemented.

According to an eighth aspect, this application provides a computer program product including instructions. When the instructions are run on a computer, the computer is caused to perform the method according to any one of the foregoing aspects.

According to a ninth aspect, a chip system is provided. The chip system includes at least one chip and a memory. The at least one chip is configured to read and execute a program stored in the memory, to implement the method according to any one of the foregoing aspects.

According to a tenth aspect, a communication system is provided, including a terminal device, a first access network device, a second access network device, and an access and mobility management network element. The terminal device is configured to perform the method according to any one of the first aspect, and the access and mobility management network element is configured to perform the method according to any one of the second aspect.

In this application, based on the implementations provided in the foregoing aspects, the implementations may be further combined to provide more implementations.

BRIEF DESCRIPTION OF DRAWINGS

FIG. 1 is a diagram of an architecture of a mobile communication system to which an embodiment of this application is applied;
FIG. 2 is a diagram of a key derivation architecture in a 5G system according to this application;
FIG. 3A is a diagram of protecting a message by using an encryption key according to this application;
FIG. 3B is a diagram of protecting a message by using an integrity protection key according to this application;
FIG. 4 is a diagram in which a terminal device is connected to a same PLMN over two 3GPP accesses according to this application;
FIG. 5 is a first overview flowchart of a key derivation method according to this application;
FIG. 6 is a second overview flowchart of a key derivation method according to this application;
FIG. 7 is a third overview flowchart of a key derivation method according to this application;
FIG. 8 is a fourth overview flowchart of a key derivation method according to this application;
FIG. 9 is a diagram of a structure of a communication apparatus according to this application; and
FIG. 10 is a diagram of a structure of another communication apparatus according to this application.

DESCRIPTION OF EMBODIMENTS

Embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) system or a new radio (new radio, NR) system, or may be applied to a future communication system or another similar communication system, or the like.

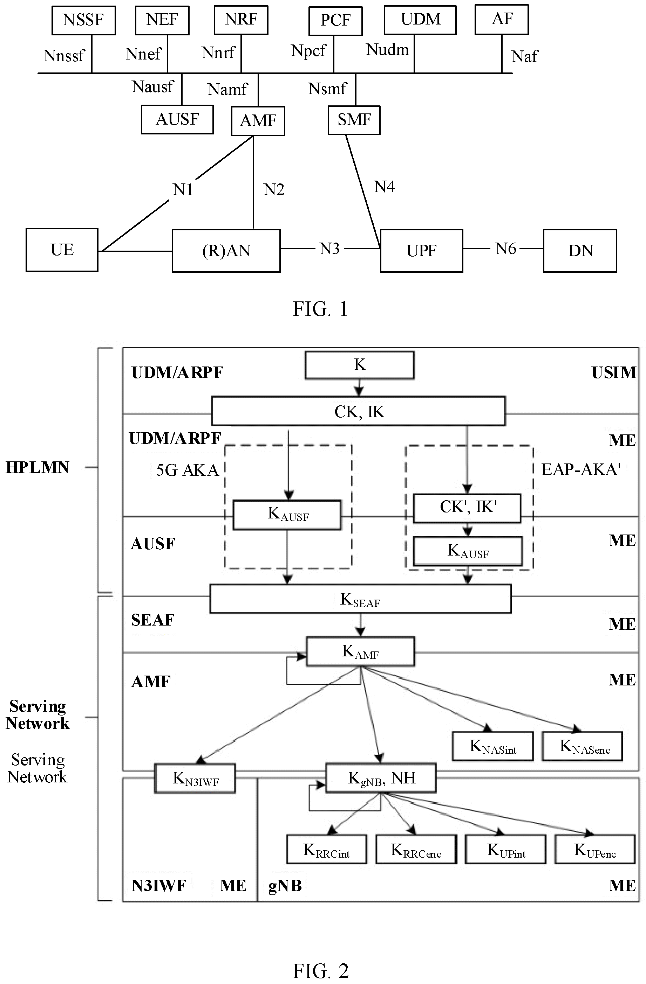

FIG. 1 is a diagram of an architecture of a 5G communication system formulated in the 3rd generation partnership project (3rd generation partnership project, 3GPP) standard. The 5G network architecture shown in FIG. 1 may include a terminal device, an access network device, and a core network device. The terminal device accesses a data network (data network, DN) through the access network device and the core network device.

The access network device may be a radio access network (radio access network, RAN) device. For example, the radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, an access node in a wireless fidelity (wireless fidelity, Wi-Fi) system, or the like. Alternatively, the radio access network device may be a module or a unit that completes some functions of a base station, for example, a central unit (central unit, CU) or a distributed unit (distributed unit, DU). The radio access network device may be a macro base station, may be a micro base station or an indoor base station, or may be a relay node, a donor node, or the like. A specific technology and a specific device form that are used by the radio access network device are not limited in embodiments of this application.

The terminal device may be user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, remote medical, smart grid, smart furniture, smart office, smart wearable, smart transportation, and smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like.

The access network device and the terminal device may be at fixed locations, or may be movable. The access network device and the terminal device may be deployed on land, including indoor, outdoor, handheld, or vehicle-mounted deployment; may be deployed on water; or may be deployed on an airplane, a balloon, and a satellite in the air. Application scenarios of the access network device and the terminal device are not limited in embodiments of this application.

The core network device includes a user plane function (user plane function, UPF) network element, an AMF network element, a session management function (session management function, SMF), a network exposure function (network exposure function, NEF) network element, a network function repository function (NF repository function, NRF) network element, a unified data management (unified data management, UDM) network element, a policy control function (policy control function, PCF) network element, an application function (application function, AF) network element, an authentication server function (authentication server function, AUSF) network element, a network slice selection function (network slice selection function, NSSF) network element, and the like. The UPF network element is a user plane network element, and other network elements are control plane network elements.

An interface between the control plane network elements may be a service-based interface (as shown in FIG. 1), or may be a point-to-point interface. This is not limited in this application, and FIG. 1 is used only as an example for description.

The following briefly describes some core network devices.

1. An SMF network element, SMF for short, is mainly configured for session management, allocation and management of an IP address of a terminal device, selection of a termination point that can manage a user equipment plane function, policy control, or a charging function interface, downlink data notification, and the like. Nsmf is a service-based interface provided by the SMF, and the SMF may communicate with another network function through the Nsmf.

2. The AMF network element, AMF for short, is mainly configured for mobility management, access management, and the like. Namf is a service-based interface provided by the AMF, and the AMF may communicate with another network function through the Namf.

3. The UDM network element, UDM for short, is configured for user identifier processing, subscription, access authentication, registration, mobility management, or the like. Nudm is a service-based interface provided by the UDM, and the UDM may communicate with another network function through the Nudm.

4. The UPF network element, UPF for short, is configured for packet routing and forwarding, quality of service (quality of service, QoS) processing of user plane data, or the like.

5. The AUSF network element, AUSF for short, is mainly configured for user authentication or the like. Nausf is a service-based interface provided by the AUSF, and the AUSF may communicate with another network function through the Nausf.

It may be understood that the core network device may further include another network element. This is not limited in this application. It may be understood that the foregoing network elements are an example of an implementation. This application does not exclude that a network element or a device having a function of the foregoing network element has another name or another form in a 6G or updated wireless communication system. The foregoing network elements or functions may be network elements in a hardware device, may be software functions running on dedicated hardware, or may be virtualized functions instantiated on a platform (for example, a cloud platform). In a possible implementation, the foregoing network elements or functions may be implemented by one device, or may be jointly implemented by a plurality of devices, or may be implemented by one functional module in one device. This is not specifically limited in embodiments of this application.

FIG. 2 shows an example of a key derivation architecture in a 5G system.

Authentication may be performed between a terminal device and a serving network. Specifically, two authentication methods may be used: extensible authentication protocol authentication and key agreement (EAP authentication and key agreement, EAP-AKA') and 5G AKA.

The terminal device stores a long-term key K and a related function. During bidirectional authentication, the terminal device may verify authenticity of the network by using the long-term key K and the related function. The long-term key K may be stored in a universal subscriber identity module (universal subscriber identity module, USIM) card of the terminal device. Correspondingly, a network side also stores the long-term key K and the related function. For example, the long-term key K and the related function may be stored in a UDM network element or an authentication repository and processing function (authentication repository and processing function, ARPF) network element (ARPF for short).

On the serving network side, the UDM or the ARPF derives a cipher key (cipher key, CK) and an integrity key (integrity key, IK) based on the long-term key K. If the 5G AKA authentication method is used, the UDM or the ARPF may derive a $K_{AUSF}$ based on the CK and the IK. If the EAP-AKA' authentication method is used, the UDM or the ARPF may derive a CK' and an IK' based on the CK and the IK, and send the CK' and the IK' to an AUSF. The AUSF further derives a KAUSF based on the CK' and the IK'.

Subsequent key derivation processes of the two authentication methods are similar. The AUSF derives an anchor key KSEAF based on the KAUSF and sends the KSEAF to a security anchor function (security anchor function, SEAF) network element (SEAF for short), and the SEAF derives a KAMF based on the KSEAF. The SEAF may be a part of an AMF or may be an independent function network element. This is not limited in this application.

Further, the AMF derives a NAS encryption key $K_{NASenc}$ and a NAS integrity protection key $K_{NASint}$ based on the $K_{AMF}$. The AMF further derives a $K_{gNB}$ based on the $K_{AMF}$, and sends the $K_{gNB}$ and an NH (next hop, next hop) to a gNB. The gNB derives an RRC key and a user plane key based on the $K_{gNB}$ and the NH. The RRC key includes an RRC encryption key $K_{RRCenc}$ and an RRC integrity protection key $K_{RRCint}$, and the user plane key includes a user plane encryption key $K_{UPenc}$ and a user plane integrity protection key $K_{UPint}$. For non-3GPP access, the AMF further derives a $K_{N3IWF}$ based on the $K_{AMF}$, and sends the $K_{N3IWF}$ to an N3IWF, to protect subsequent data traffic of the non-3GPP access.

On a terminal device side, the terminal device includes the USIM and mobile equipment (mobile equipment, ME). Similar to a key derivation process on the serving network side, a key derivation process is completed by the ME.

The following briefly describes key derivation and key usage scenarios in this application.

(1) Input parameters needed by the AMF to derive the $K_{gNB}$ based on the $K_{AMF}$.

It may be understood that the AMF and the ME in the UE derive the $K_{gNB}$ based on the $K_{AMF}$ in a same manner. For example, the input parameters for deriving the $K_{gNB}$ based on the $K_{AMF}$ are specifically as follows:

$$FC = 0x6E;$$

P0=Value of uplink NAS counter (uplink NAS COUNT);
L0=Length of the value of the uplink NAS counter;
P1=Access type distinguisher (access type distinguisher); and
L1=Length of the access type distinguisher.

A value of P1 may be shown in Table 1.

Table 1

| Access type distinguisher | Value |
|---|---|
| 3GPP access | 0x01 |
| Non-3GPP access | 0x02 |

It can be learned from the foregoing that $K_{gNB}$=KDF (FC, P0, L0, P1, L1), where KDF is short for key derivation function (Key derivation function, KDF). The access type distinguisher (that is, P1) may be used to distinguish between 3GPP access and non-3GPP access.

(2) Use of an integrity protection key and an encryption key

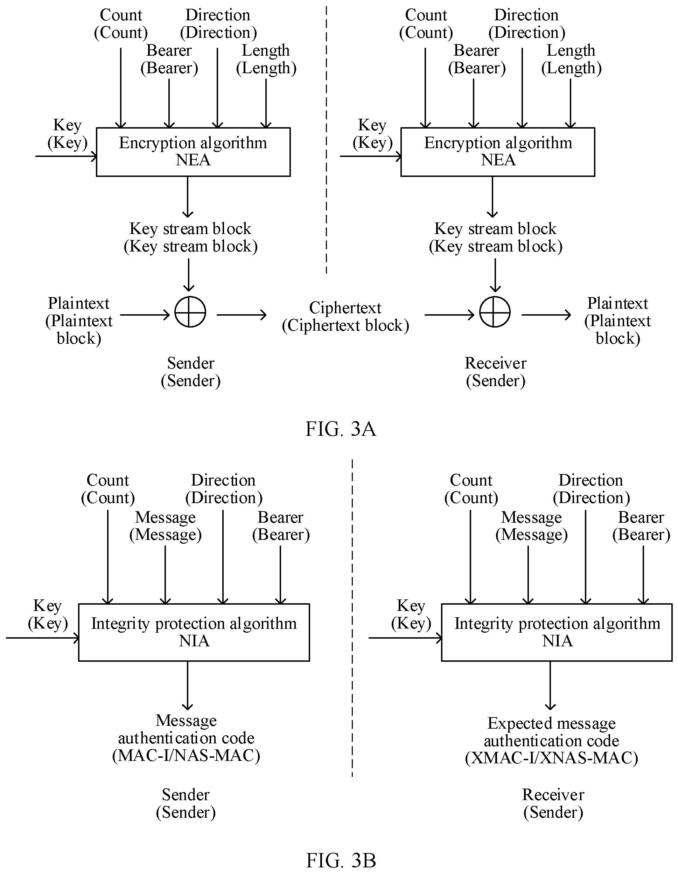

A process of protecting a message by using the encryption key is shown in FIG. 3A. A process of protecting a message by using the integrity protection key is shown in FIG. 3B. It can be learned from FIG. 3A and FIG. 3B that a left side of a dashed line represents a sender, and a right side of the dashed line represents a receiver.

In FIG. 3A, during message protection, in addition to the encryption key, the following input parameters are further needed: a count, a bearer (bearer) parameter, a direction (direction) parameter, and a length (Length) parameter. When the encryption protection key is $K_{NASenct}$, the bearer parameter is a NAS connection identifier (NAS connection identifier). In this case, the NAS connection identifier is the same as an access type distinguisher. A value 0 of the direction parameter indicates uplink, and a value 1 of the direction parameter indicates downlink. When the direction parameter indicates uplink, the count is a value of an uplink NAS counter. When the direction parameter indicates downlink, the count is a value of a downlink NAS counter.

Similarly, in FIG. 3B, during message protection, in addition to the integrity protection key, the following input parameters are further needed: a count, a message (message) parameter, a direction (direction) parameter, and a bearer parameter. When the integrity protection key is $K_{NASint}$, the bearer parameter is a NAS connection identifier. In this case, the NAS connection identifier is the same as an access type distinguisher.

A same terminal device may access a network over both a 3GPP access and a non-3GPP access. When an access traffic steering, switching, and splitting (access traffic steering, switching, and splitting, ATSSS) function is used, the terminal device establishes a special protocol data unit (protocol data unit, PDU) session: a multi-access PDU session (multi-access PDU session, MA PDU) session. This session supports multi-access, and data in the session may be transmitted on different access paths. A terminal device side needs to support a plurality of steering functions: a multipath TCP (multipath TCP, MPTCP) function, a multipath QUIC (multipath QUIC MPQUIC) function, and an ATSSS-low layer (low layer, LL) function. TCP is short for transmission control protocol (transmission control protocol, TCP). QUIC is short for quick UDP internet connection (quick UDP internet connection, QUIC). UDP is short for user datagram protocol (User Datagram Protocol, UDP). Each steering function in the terminal device allows, according to an ATSSS rule provided by the network, service traffic steering, switching, and splitting across the 3GPP access and the non-3GPP access.

Currently, a multi-access scenario supports one 3GPP access and one non-3GPP access. The multi-access scenario may also be referred to as a multi-registration scenario. After receiving a registration request message, the AMF checks whether the terminal device is authenticated by the network. If an available security context for the terminal device is found through retrieval by using a 5G globally unique temporary identifier (5G globally unique temporary identifier, 5G-GUTI), the AMF may decide not to run new authentication. For example, the available security context for the terminal device is a common 5G NAS security context, which may also be referred to as a common NAS security context.

For example, if the terminal device first registers to an AMF over a 3GPP access, the terminal device registers to the same AMF over a non-3GPP access, and the AMF finds, through retrieval by using the 5G-GUTI, a 5G NAS security context for the terminal device exists, the AMF may decide not to run new authentication. In this case, the terminal device also directly uses the 5G NAS security context, and uses the 5G NAS security context to protect registration over the non-3GPP access. If the terminal device stores a NAS count for the non-3GPP access for a PLMN, the stored NAS count for the non-3GPP access for the PLMN is used to protect the registration over the non-3GPP access. If the terminal device does not store a NAS count for the non-3GPP access for a PLMN, the 5G NAS security context is used for the first time (partially) over the non-3GPP access. In this case, before using the 5G NAS security context over the non-3GPP access, the terminal device needs to set a UL NAS count and a DL NAS count for the non-3GPP access to zero.

The AMF and the terminal device should establish a common NAS security context including a set of NAS keys and algorithms during initial registration. The AMF and the terminal device should also store parameters specific to each NAS connection in the common NAS security context. To achieve key separation and anti-replay protection, the parameters for each NAS connection include a pair of NAS counters for uplink and downlink and a unique NAS connection identifier. For example, for the 3GPP access, a value of the unique NAS connection identifier should be set to "0x01"; and for the non-3GPP access, the value of the unique NAS connection identifier should be set to "0x02". Other parameters in the common NAS security context, such as an algorithm identifier, are common to a plurality of NAS connections.

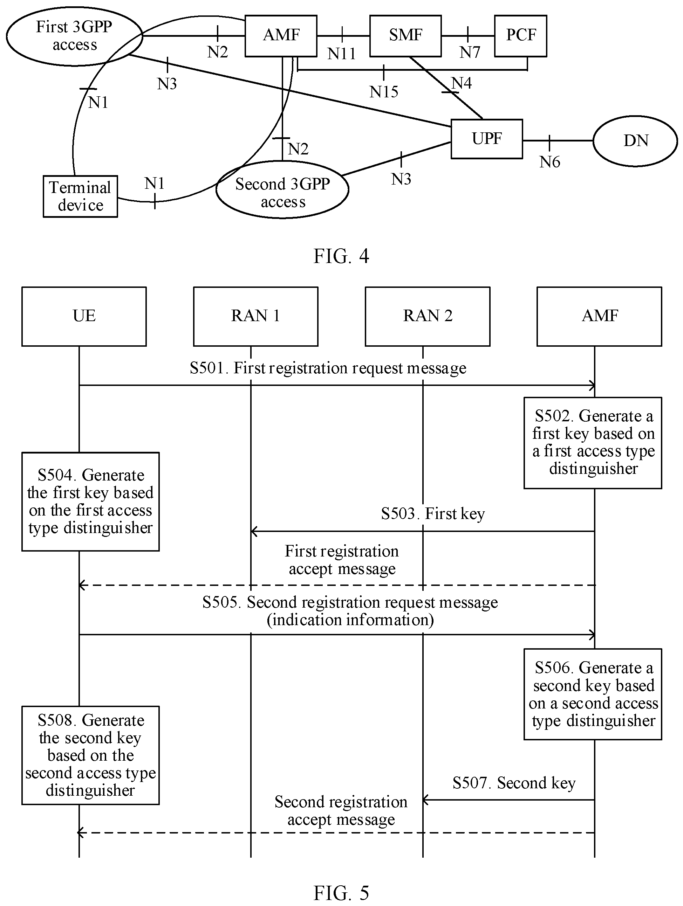

Currently, two 3GPP accesses are not supported in the multi-access scenario. Therefore, how an MA PDU session supports at least two 3GPP accesses becomes a problem that deserves attention. The two 3GPP access paths may be in a same PLMN or different PLMNs. The two 3GPP access paths may use a same standard, or may use different standards. For example, the following cases may be included: terrestrial NR+terrestrial NR; terrestrial NR+terrestrial evolved universal mobile communication system terrestrial radio access (evolved universal terrestrial radio access, E-UTRA) (for example, an evolved packet core (evolved packet core, EPC) and a 5G core network (5G Core Network, 5GC) are combined); terrestrial NR+non-terrestrial NR; and dual non-terrestrial NR (for example, using a same or different non-terrestrial network (non-terrestrial network, NTN) orbits, such as an Earth observation orbit, a medium orbit, or a low orbit). Unless otherwise specified, this application mainly discusses a multi-access scenario in which a terminal device is connected to a same PLMN over two 3GPP accesses, and whether standards of the two 3GPP access paths are the same is not limited. FIG. 4 is a diagram in which a terminal device is connected to a same PLMN over two 3GPP accesses. It should be noted that this application is described by using a dual-3GPP access scenario as an example. This application may also be applicable to a multi-3GPP access scenario, for example, a scenario of two or more 3GPP accesses. The dual-3GPP access may also be replaced with multi-3GPP access.

When one 3GPP access and one non-3GPP access are supported in the multi-access scenario, a same $K_{AMF}$ is used for key derivation in the two accesses. For the 3GPP access, the $K_{AMF}$ is used to derive a $K_{gNB}$, and for the non-3GPP access, the $K_{AMF}$ is used to derive a $K_{N3IWF}$. In the foregoing two key derivation processes, an input parameter includes an access type distinguisher (that is, P1), to distinguish between the 3GPP access and the non-3GPP access. It can be learned that a current access type distinguisher (that is, P1) cannot distinguish between two 3GPP accesses. Therefore, when a terminal device is connected to a same PLMN over two 3GPP accesses, if primary authentication is performed only once, the two 3GPP accesses cannot be distinguished, and the two 3GPP accesses may use a same key, that is, a key reuse problem occurs.

Based on the network system architecture shown in FIG. 1 and the content described in the foregoing related technologies, embodiments of this application provide several possible communication methods. An example in which an access and mobility management network element and a terminal device perform the key derivation methods is used for description. It should be understood that the access and mobility management network element may alternatively be replaced with a communication apparatus having a function of the access and mobility management network element or a chip, a unit, or a module in the communication apparatus having the function of the access and mobility management network element. The terminal device may alternatively be replaced with a communication apparatus having a function of the terminal or a chip, a unit, or a module in the communication apparatus having the function of the terminal.

In embodiments of this application, the terminal device sends a first registration request message and a second registration request message to the access and mobility management network element. The first registration request message is used by the terminal device to request to register to a network over a first 3GPP access. The second registration request message is used by the terminal device to request to register to the network over a second 3GPP access. Further, the access and mobility management network element and the terminal device generate a first key for the first 3GPP access and a second key for the second 3GPP access. The first key is different from the second key, the first key is a key used for communication between the terminal device and a first access network device, and the second key is a key used for communication between the terminal device and a second access network device. The access and mobility management network element sends the first key to the first access network device, and sends the second key to the second access network device. According to the foregoing method, two different keys are generated for two 3GPP accesses, thereby achieving key isolation.

In a possible implementation, the terminal device may communicate with the first access network device by using the first key or a key derived based on the first key. The terminal device may communicate with the second access network device by using the second key or a key derived based on the second key.

For example, when the terminal device communicates with the first access network device, the terminal device and the first access network device may generate a first RRC key and a first user plane key based on the first key. The first RRC key includes a first RRC integrity protection key and/or a first RRC encryption key. The first user plane key includes a first user plane integrity protection key and/or a first user plane encryption key. Further, the terminal device and the first access network device may perform security protection on first RRC signaling based on the first RRC key, and/or the terminal device and the first access network device may perform security protection on first data based on the first user plane key. The first RRC signaling is RRC signaling sent by the terminal device to the first access network device, or RRC signaling sent by the first access network device to the terminal device. The first data is uplink data sent by the terminal device to the first access network device, or downlink data sent by the first access network device to the terminal device.

Similarly, when the terminal device communicates with the second access network device, the terminal device and the second access network device may generate a second RRC key and a second user plane key based on the second key. The second RRC key includes a second RRC integrity protection key and/or a second RRC encryption key. The second user plane key includes a second user plane integrity protection key and/or a second user plane encryption key. Further, the terminal device and the second access network device may perform security protection on second RRC signaling based on the second RRC key, and/or the terminal device and the second access network device may perform security protection on second data based on the second user plane key. The second RRC signaling is RRC signaling sent by the terminal device to the second access network device, or RRC signaling sent by the second access network device to the terminal device. The second data is uplink data sent by the terminal device to the second access network device, or downlink data sent by the second access network device to the terminal device.

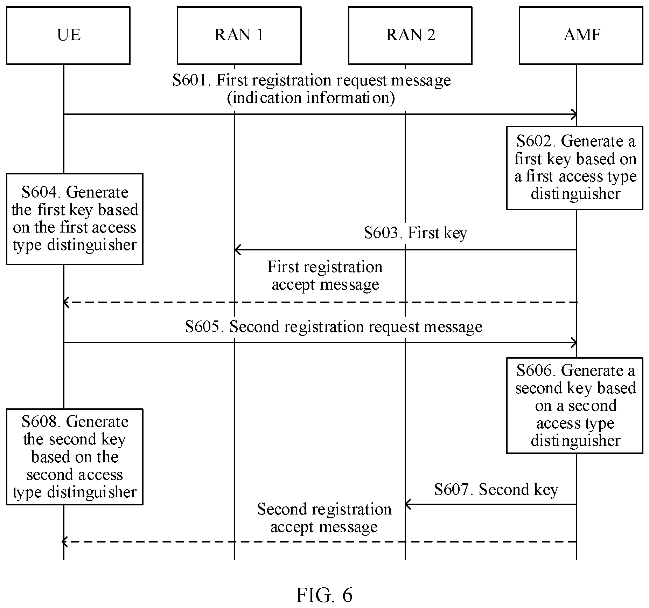

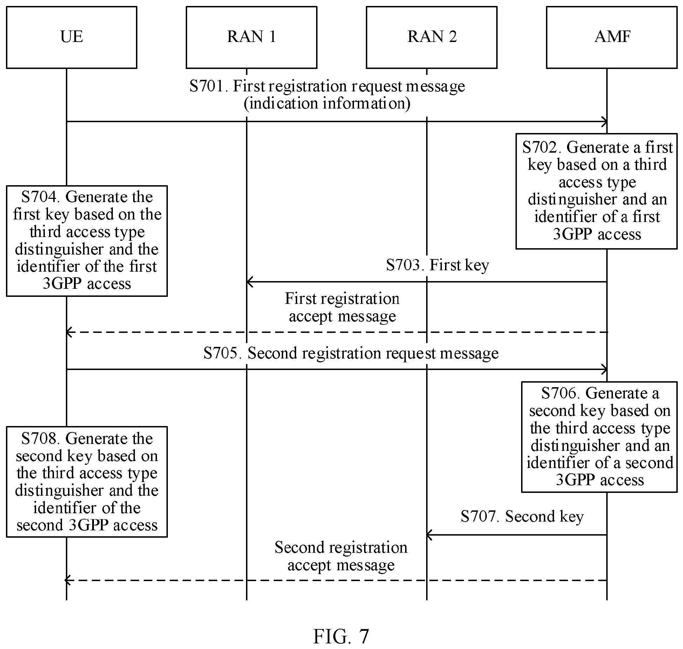

As shown in FIG. 5 to FIG. 8, the following describes the foregoing process with reference to specific examples. In the following examples, the terminal device is UE, the access and mobility management network element is an AMF, the first access network device is a RAN 1, and the second access network device is a RAN 2.

Example 1

S501. The UE sends a first registration request message to the AMF via the RAN 1. Correspondingly, the AMF receives the first registration request message.

The first registration request message is used by the UE to request to register to a network over a first 3GPP access.

For example, the UE sends the first registration request message to the RAN 1. The RAN 1 selects the AMF, and sends the first registration request message to the AMF. Optionally, if the UE has previously registered to another AMF (that is, a source AMF), the AMF obtains a previous context for the UE from the source AMF. If the UE has not registered to another AMF, the RAN 1 performs an AMF discovery and selection process.

For example, the AMF may further trigger a primary authentication procedure, to complete authentication performed by a network side on the UE and authentication performed by the UE on the network side. The network side derives a key $K_{AMF}$, and determines a key set identifier (key set identifier in 5G, ngKSI) corresponding to the key $K_{AMF}$. For a derivation process of the $K_{AMF}$, refer to the foregoing related content. Details are not described herein again. The ngKSI identifies the key $K_{AMF}$ established in the primary authentication procedure. If identity authentication on the UE succeeds, the ngKSI may further identify a part of a security context created by the UE. For example, the ngKSI may identify the corresponding key $K_{AMF}$, a value of an uplink NAS counter, a value of a downlink NAS counter, and the like.

As shown in FIG. 2, the UE may also derive the key $K_{AMF}$. Further, the AMF and the UE may derive a NAS encryption key $K_{NASenc}$ and/or a NAS integrity protection key $K_{NASint}$ based on the $K_{AMF}$. The NAS encryption key $K_{NASenc}$ and/or the NAS integrity protection key $K_{NASint}$ may be stored in the security context for the UE. In this application, both the NAS encryption key $K_{NASenc}$ and the NAS integrity protection key $K_{NASint}$ may be referred to as NAS security protection keys. Both the NAS security protection key and an AMF key may be referred to as NAS keys.

S502. The AMF generates a first key based on a first access type distinguisher.

In a possible implementation, before generating the first key, the AMF determines the first access type distinguisher for the first 3GPP access. The first access type distinguisher may be stored in the security context for the UE. For example, the AMF further creates a pair of NAS counters for a first NAS connection corresponding to the first 3GPP access, and sets the pair of NAS counters to initial values. The AMF stores parameters for the first NAS connection in the security context for the UE. The parameters for the first NAS connection include the first access type distinguisher and the pair of NAS counters.

In an example, before generating the first key, the AMF determines the first access type distinguisher, and the UE also determines the first access type distinguisher. The AMF and the UE may agree in advance on a 1st allocated access type distinguisher in a protocol, to ensure that first access type distinguishers allocated by the AMF and the UE are the same.

In another example, the AMF determines the first access type distinguisher, and sends the first access type distinguisher to the RAN 1. The RAN 1 includes the first access type distinguisher in a first access stratum (access stratum, AS) security mode command (AS security mode command) AS security mode command, for notifying the UE of the first access type distinguisher.

In another example, the AMF determines the first access type distinguisher, and includes the first access type distinguisher in a first registration accept message for notifying the UE of the first access type distinguisher.

For example, as shown in Table 2, the first access type distinguisher may be 0x01 or 0x03.

Table 2

| Access type distinguisher | Value |
|---------------------------|-------|
| 3GPP access | 0x01 |
| Non-3GPP access | 0x02 |
| 3GPP access | 0x03 |

It may be understood that the foregoing values 0x01 and 0x03 are merely examples, and another value that is not defined currently, for example, 0x11, may be used through extension. This is not limited herein.

In a possible implementation, after determining the first access type distinguisher, the AMF generates the first key based on the AMF key (for example, the $K_{AMF}$) and the first access type distinguisher. The first key may be denoted as a $K_{gNB}1$. It may be understood that the first key further needs to be generated with reference to another parameter, for example, $K_{gNB}1=KDF$ (FC, P0, L0, P1, L1). In this case, P0 is a value of an uplink NAS counter corresponding to the first 3GPP access, L0 is a length of the value of the uplink NAS counter corresponding to the first 3GPP access, P1 is the first access type distinguisher, and L1 is a length of the first access type distinguisher. For details, refer to the foregoing related content. Details are not described herein again.

For example, the AMF may further send the first registration accept message to the UE via the RAN 1, and the first registration accept message includes a 5G-GUTI. The 5G-GUTI is allocated by the AMF to the UE. Optionally, the first registration accept message includes the first access type distinguisher.

In addition, the AMF may further send a NAS security mode command (NAS security mode command) to the UE via the RAN 1. The NAS security mode command includes the ngKSI. The UE may further return a NAS security mode complete (NAS security mode complete) message to the AMF via the RAN 1.

S503. The AMF sends the first key to the RAN 1. Correspondingly, the RAN 1 receives the first key from the AMF.

For example, the RAN 1 may generate a first RRC key and a first user plane key based on the received first key (for example, the $K_{gNB}1$). For example, the first RRC key includes a $K_{RRCenc}1$ and/or a $K_{RRCint}1$, and the first user plane key includes a $K_{UPenc}1$ and/or a $K_{UPint}1$.

Optionally, the AMF may further send the first access type distinguisher to the RAN 1. In addition, the RAN 1 may further send the first AS security mode command to the UE, where the first AS security mode command is used to notify the UE of an RRC signaling protection cryptography algorithm and/or a user plane protection cryptography algorithm that are/is selected by the network side. Optionally, the first AS security mode command may further include the first access type distinguisher. Further, after the UE performs S504 to generate the first key, the UE may further send a first AS security mode response to the RAN 1. In addition, the RAN 1 may alternatively include the first access type distinguisher in other signaling. This is not limited in this application.

S504. The UE generates the first key based on the first access type distinguisher.

In a possible implementation, before generating the first key, the UE may further determine the first access type distinguisher for the first 3GPP access.

In an example, the UE determines the first access type distinguisher. The AMF and the UE may agree in advance on a $1^{st}$ allocated access type distinguisher in a protocol, to ensure that first access type distinguishers allocated by the AMF and the UE are the same.

In another example, the UE receives the first registration accept message from the AMF, where the first registration accept message includes the first access type distinguisher.

In still another example, the UE receives the first AS security mode command from the RAN 1, where the first AS security mode command includes the first access type distinguisher.

In addition, the UE further creates a pair of NAS counters for the first NAS connection corresponding to the first 3GPP access, and sets the pair of NAS counters to initial values. The UE stores parameters for the first NAS connection, and the parameters for the first NAS connection are stored in the security context for the UE.

The parameters for the first NAS connection include the first access type distinguisher and the pair of NAS counters.

In a possible implementation, the UE generates the first key, namely, the $K_{gNB}1$, based on an AMF key (for example, the $K_{AMF}$) and the first access type distinguisher, and may further generate the first RRC key and the first user plane key based on the first key. A method for generating the first key by the AMF is the same as a method for generating the first key by the UE. Details are not described herein again. The AMF key herein is the same as the AMF key mentioned in S502, and both are the key $K_{AMF}$.

It may be understood that a sequence of S502, S503, and S504 is not limited in this application.

Therefore, when the RAN 1 communicates with the UE, the RAN 1 and the UE may perform security protection on first RRC signaling by using the first RRC key, and/or perform security protection on first data by using the first user plane key.

S505. The UE sends a second registration request message to the AMF. Correspondingly, the AMF receives the second registration request message.

The second registration request message is used by the UE to request to register to the network over a second 3GPP access.

For example, the second registration request message includes indication information, where the indication information indicates that the UE is to be connected to the network over two 3GPP accesses. Alternatively, it may be described as follows: The indication information indicates that the UE registers to the network over two 3GPP accesses.

It may be understood that the indication information may further indicate that the UE is to be connected to the network over multiple 3GPP accesses, or indicate that the UE registers to the network over multiple 3GPP accesses. The multiple 3GPP accesses may be understood as two or more 3GPP accesses.

For example, the indication information may indicate that a registration type (registration type) is dual-3GPP registration, or the indication information may indicate that an access type (access type) is dual-3GPP access.

For another example, the indication information may indicate that a registration type is multi-3GPP registration, or the indication information may indicate that an access type is multi-3GPP access.

In addition, the second registration request message may further include the 5G-GUTI. Optionally, the second registration request message may further include the ngKSI. The UE may further perform integrity protection on the second registration request message by using the NAS integrity protection key $K_{NASint}$. It may be understood that, with reference to S501, it can be learned that the NAS integrity protection key $K_{NASint}$ may be derived based on the $K_{AMF}$, and the NAS integrity protection key $K_{NASint}$ is stored in the security context for the UE.

For example, the UE sends the second registration request message to the RAN 2. The RAN 2 obtains an identifier of the AMF based on the 5G-GUTI, and the RAN 2 forwards the second registration request message to the AMF. For example, the identifier of the AMF is a globally unique AMF identifier (globally unique AMF identifier, GUAMI), <5G-GUTI>=<GUAMI>+<5G-TMSI>, and an identifier of a PLMN with which the UE registers is also provided in the GUAMI of the 5G-GUTI. For example, a mobile country code (mobile country code, MCC) and a mobile network code (mobile network code, MNC) are also included in the GUAMI.

After receiving the second registration request message, the AMF may obtain, through retrieval, the security context for the UE in the AMF based on the 5G-GUTI (and the ngKSI) in the second registration request message, and verify integrity of the second registration request message by using the NAS integrity protection key $K_{NASint}$ in the security context for the UE, to complete the identity authentication on the UE.

S506. The AMF generates a second key based on a second access type distinguisher.

In a possible implementation, after the AMF successfully authenticates an identity of the UE and before the AMF generates the second key, the AMF determines the second access type distinguisher for the second 3GPP access based on the indication information.

For example, the AMF determines, for the second 3GPP access based on the indication information and the first access type distinguisher, the second access type distinguisher that is different from the first access type distinguisher. According to the foregoing manner, the AMF may determine, based on the indication information, that the UE is to be connected to the network over two 3GPP accesses, to obtain the first access type distinguisher based on the security context for the UE, and the AMF determines the second access type distinguisher for the second 3GPP access, where the second access type distinguisher is an unused access type distinguisher. The first access type distinguisher is different from the second access type distinguisher.

For example, as shown in Table 2, if the first access type distinguisher is 0x01, the second access type distinguisher is 0x03. If the first access type distinguisher is 0x03, the second access type distinguisher is 0x01.

In addition, the AMF creates a pair of NAS counters for a second NAS connection corresponding to the second 3GPP access, and sets the pair of NAS counters to initial values. The AMF stores parameters for the second NAS connection in the security context for the UE. The parameters for the second NAS connection include the second access type distinguisher and the pair of NAS counters.

It may be understood that the AMF maintains a set of security contexts for the UE for the first 3GPP access and the second 3GPP access. The security context for the UE includes parameters for two sets of NAS connections. The parameters for the first NAS connection include the first access type distinguisher and one pair of NAS counters, and the parameters for the second NAS connection include the second access type distinguisher and one pair of NAS counters.

In a possible implementation, after determining the second access type distinguisher, the AMF generates the second key based on an AMF key (for example, the $K_{AMF}$) and the second access type distinguisher. The second key may be denoted as a $K_{gNB}2$. The AMF key herein is the same as the AMF key mentioned in S502 and the AMF key mentioned in S504, and all are the key $K_{AMF}$. It may be understood that the second key further needs to be generated with reference to another parameter. It may be understood that the second key further needs to be generated with reference to another parameter, for example, $K_{gNB}2=KDF$ (FC, P0, L0, P1, L1). In this case, P0 is a value of an uplink NAS counter corresponding to the second 3GPP access, L0 is a length of the value of the uplink NAS counter corresponding to the second 3GPP access, P1 is the second access type distinguisher, and L1 is a length of the second access type distinguisher.

In addition, the AMF may further send a second registration accept message to the UE. Optionally, the second registration accept message may include the second access type distinguisher.

S507. The AMF sends the second key to the RAN 2. Correspondingly, the RAN 2 receives the second key from the AMF.

For example, the RAN 2 may generate a second RRC key and a second user plane key based on the received second key (for example, the $K_{gNB}2$). For example, the second RRC key includes a $K_{RRCenc}2$ and a $K_{RRCint}2$, and the second user plane key includes a $K_{UPenc}2$ and a $K_{UPint}2$.

Optionally, the AMF may further send the second access type distinguisher to the RAN 2. In addition, the RAN 2 may further send a second AS security mode command to the UE, where the second AS security mode command is used to notify the UE of an RRC signaling protection cryptography algorithm and/or a user plane protection cryptography algorithm that are/is selected by the network side. Optionally, the second AS security mode command may further include the second access type distinguisher. Further, after the UE performs S508 to generate the second key, the UE may further send a second AS security mode response to the RAN 2. In addition, the RAN 2 may alternatively include the second access type distinguisher in other signaling. This is not limited in this application.

S508. The UE generates the second key based on the second access type distinguisher.

In a possible implementation, before generating the second key, the UE may further determine the second access type distinguisher for the second 3GPP access.

In an example, the UE determines the second access type distinguisher for the second 3GPP access based on the first access type distinguisher in the security context for the UE. For example, the UE determines that the first access type distinguisher has been used for the first 3GPP access, and allocates the unused second access type distinguisher to the second 3GPP access. In this case, because the AMF and the UE have agreed in advance on the 1st allocated access type distinguisher in a protocol, and there are two access type distinguishers used to identify 3GPP access as shown in Table 2, it can be ensured that second access type distinguishers allocated by the AMF and the UE for the second time are also the same.

In another example, the AMF sends the second registration accept message to the UE, where the second registration accept message includes the second access type distinguisher. Therefore, the UE may determine the second access type distinguisher based on the second registration accept message.

In still another example, the AMF sends the second access type distinguisher to the RAN 2, and the RAN 2 sends the second AS security mode command to the UE, where the second AS security mode command includes the second access type distinguisher. Therefore, the UE may determine the second access type distinguisher based on the second AS security mode command.

In addition, the UE further creates a pair of NAS counters for the second NAS connection corresponding to the second 3GPP access, and sets the pair of NAS counters to initial values. The UE stores parameters for the second NAS connection, where the parameters for the second NAS connection include the second access type distinguisher and the pair of NAS counters.

It may be understood that the UE maintains a set of security contexts for the UE for the first 3GPP access and the second 3GPP access. The security context for the UE includes parameters for two sets of NAS connections. The parameters for the first NAS connection include the first access type distinguisher and one pair of NAS counters, and the parameters for the second NAS connection include the second access type distinguisher and one pair of NAS counters.

In a possible implementation, the UE generates the second key, namely, the $K_{gNB}2$, based on an AMF key (for example, the $K_{AMF}$) and the second access type distinguisher, and may further generate the second RRC key and the second user plane key based on the second key. A method for generating the second key by the AMF is the same as a method for generating the second key by the UE. The AMF key herein is the same as the AMF key mentioned in S502, the AMF key mentioned in S504, and the AMF key mentioned in S506, and all are the key $K_{AMF}$.

It may be understood that a sequence of S506, S507, and S508 is not limited in this application.

Therefore, when the RAN 2 communicates with the UE, the RAN 2 and the UE may protect second RRC signaling by using the second RRC key, and protect second data by using the second user plane key.

According to the foregoing method, different access type distinguishers are used in two 3GPP access processes, so that it can be ensured that the first key is different from the second key, thereby achieving key isolation.

Example 2

S601. The UE sends a first registration request message to the AMF via the RAN 1. Correspondingly, the AMF receives the first registration request message.

For specific content of S601, refer to S501.

A difference from S501 lies in that the first registration request message includes indication information. For the indication information, refer to related content in S505.

S602. The AMF generates a first key based on a first access type distinguisher.

In a possible implementation, before generating the first key, the AMF determines the first access type distinguisher for a first 3GPP access based on the indication information, where the first access type distinguisher is one distinguisher in a dual-3GPP access type distinguisher. The first access type distinguisher may be stored in a security context for the UE. For example, if the AMF determines, based on the indication information, that the UE is to be connected to a network over two 3GPP accesses, the AMF determines, for the first 3GPP access, one distinguisher in the dual-3GPP access type distinguisher as the first access type distinguisher, creates a pair of NAS counters, and sets the pair of NAS counters to initial values. The AMF stores parameters for a first NAS connection corresponding to the first 3GPP access in the security context for the UE. The parameters for the first NAS connection include the first access type distinguisher and the pair of NAS counters.

The dual-3GPP access type distinguisher is a newly defined access type distinguisher, a value of the dual-3GPP access type distinguisher is different from that of the previous access type distinguisher used to identify 3GPP access, and the dual-3GPP access type distinguisher is used in a multi-3GPP access or dual-3GPP access scenario. The dual-3GPP access type distinguisher may also be referred to as a multi-3GPP access type distinguisher. Generally, the dual-3GPP access type distinguisher may include two or more distinguishers.

Table 3 shows a possible implementation of the dual-3GPP access type distinguisher. As shown in Table 3, the first access type distinguisher may be 0x03 or 0x04.

Table 3

| Access type distinguisher | Value |
|---|---|
| 3GPP access | 0x01 |

(continued)

| Access type distinguisher | Value |
|---|---|
| Non-3GPP access | 0x02 |
| Dual-3GPP access | 0x03 |
| Dual-3GPP access | 0x04 |

It may be understood that the foregoing values 0x03 and 0x04 are merely examples, and another value that is not defined currently may be used through extension. This is not limited herein.

In an example, before generating the first key, the AMF determines the first access type distinguisher, and the UE also determines the first access type distinguisher. In this case, the AMF and the UE may agree in advance on a 1st allocated distinguisher in the dual-3GPP access type distinguisher in a protocol, to ensure that distinguishers allocated by the AMF and the UE are the same.

In another example, the AMF determines the first access type distinguisher, and includes the first access type distinguisher in a first registration accept message for notifying the UE of the first access type distinguisher.

In still another example, the AMF determines the first access type distinguisher, and sends the first access type distinguisher to the RAN 1. The RAN 1 includes the first access type distinguisher in a first AS security mode command, for notifying the UE of the first access type distinguisher.

In addition, in a possible implementation, a field may be further added to the security context for the UE. For example, the field is denoted as a first field. For example, the first field may include 1 bit. When a value of the 1 bit is 1, it indicates that the UE is to be connected to the network over two 3GPP accesses or an access type (or a registration type) of the UE is dual-3GPP access or multi-3GPP access. When the value of the 1 bit is 0, it indicates that the UE is not connected to the network over two 3GPP accesses or the access type (or the registration type) of the UE is non-dual-3GPP access or non-multi-3GPP access. The AMF may determine a value of the first field based on the indication information.

In a possible implementation, after determining the first access type distinguisher, the AMF generates the first key based on an AMF key (for example, a $K_{AMF}$) and the first access type distinguisher. The first key may be denoted as a $K_{gNB}1$. For example, $K_{gNB}1=KDF$ (FC, P0, L0, P1, L1, P2, L2), where P0 is a value of an uplink NAS counter corresponding to the first 3GPP access, L0 is a length of the value of the uplink NAS counter corresponding to the first 3GPP access, P1 is the first access type distinguisher, and L1 is a length of the first access type distinguisher.

In addition, the AMF may further send the first registration accept message to the UE via the RAN 1. Optionally, the first registration accept message includes the first access type distinguisher.

S603. The AMF sends the first key to the RAN 1. Correspondingly, the RAN 1 receives the first key from the AMF.

For example, the RAN 1 may generate a first RRC key and a first user plane key based on the received first key (for example, the $K_{gNB}1$). For example, the first RRC key includes a $K_{RRCenc}1$ and/or a $K_{RRCint}1$, and the first user plane key includes a $K_{UPenc}1$ and/or a $K_{UPint}1$.

Optionally, the AMF may further send the first access type distinguisher to the RAN 1. In addition, the RAN 1 may further send the first AS security mode command to the UE, where the first AS security mode command is used to notify the UE of an RRC signaling protection cryptography algorithm and/or a user plane protection cryptography algorithm that are/is selected by the network side. Optionally, the first AS security mode command may further include the first access type distinguisher. Further, after the UE performs S604 to generate the first key, the UE may further send a first AS security mode response to the RAN 1.

S604. The UE generates the first key based on the first access type distinguisher.

In a possible implementation, before generating the first key, the UE may further determine the first access type distinguisher for the first 3GPP access.

In an example, the UE has known that the UE is connected to the network over two 3GPP accesses, and the first 3GPP access is a 1st 3GPP access. In this case, before generating the first key, the UE determines the first access type distinguisher for the first 3GPP access, where the first access type distinguisher is one distinguisher in a dual-3GPP access type distinguisher.

In another example, the UE receives the first registration accept message from the AMF, where the first registration accept message includes the first access type distinguisher.

In still another example, the UE receives the first AS security mode command from the RAN 1, where the first AS security mode command includes the first access type distinguisher.

In addition, the UE further creates a pair of NAS counters for the first NAS connection corresponding to the first 3GPP access, and sets the pair of NAS counters to initial values. The UE stores parameters for the first NAS connection, and the parameters for the first NAS connection are stored in the security context for the UE. The parameters for the first NAS connection include the first access type distinguisher and the pair of NAS counters.

Further, in a possible implementation, the UE generates the first key, namely, the $K_{gNB}1$, based on an AMF key (for example, the $K_{AMF}$) and the first access type distinguisher, and may further generate the first RRC key and the first user plane key based on the first key. A method for generating the first key by the AMF is the same as a method for generating the first key by the UE. Details are not described herein again. The AMF key herein is the same as the AMF key mentioned in S602, and both are the key $K_{AMF}$.

It may be understood that a sequence of S602, S603, and S604 is not limited in this application.

Therefore, when the RAN 1 communicates with the UE, the RAN 1 and the UE may perform security protection on first RRC signaling by using the first RRC key, and perform security protection on first data by using the first user plane key.

S605. The UE sends a second registration request message to the AMF. Correspondingly, the AMF receives the second registration request message.

The second registration request message is used by the UE to request to register to the network over a second 3GPP access. Optionally, the second registration request message may also include indication information.

In addition, for other content of the second registration request message, refer to S505.

S606. The AMF generates a second key based on a second access type distinguisher.

In a possible implementation, after the AMF successfully authenticates an identity of the UE and before the AMF generates the second key, the AMF determines the second access type distinguisher for the second 3GPP access.

For example, the AMF may obtain the first access type distinguisher based on the security context for the UE. Because the first access type distinguisher is one distinguisher in the dual-3GPP access type distinguisher, the AMF determines that the UE is to be connected to the network over two 3GPP accesses. Alternatively, if the security context for the UE includes the first field, the AMF determines, based on the first field in the security context for the UE, that the UE is to be connected to the network over two 3GPP accesses. Alternatively, if the second registration request message includes the indication information, the AMF determines, based on the indication information, that the UE is to be connected to the network over two 3GPP accesses.

Further, after the AMF determines that the UE is to be connected to the network over two 3GPP accesses, the AMF allocates the second access type distinguisher to the second 3GPP access. The second access type distinguisher is another distinguisher in the dual-3GPP access type distinguisher, and the second access type distinguisher is an unused distinguisher in the dual-3GPP access type distinguisher. The first access type distinguisher is different from the second access type distinguisher.

In addition, the AMF creates a pair of NAS counters for a second NAS connection corresponding to the second 3GPP access, and sets the pair of NAS counters to initial values. The AMF stores parameters for the second NAS connection in the security context for the UE. The parameters for the second NAS connection include the second access type distinguisher and the pair of NAS counters.

It may be understood that the AMF maintains a set of security contexts for the UE for the first 3GPP access and the second 3GPP access. The security context for the UE includes parameters for two sets of NAS connections. The parameters for the first NAS connection include the first access type distinguisher and one pair of NAS counters, and the parameters for the second NAS connection include the second access type distinguisher and one pair of NAS counters.

Further, in a possible implementation, after determining the second access type distinguisher, the AMF generates the second key based on an AMF key (for example, the $K_{AMF}$) and the second access type distinguisher. The second key may be denoted as a $K_{gNB}2$. It may be understood that the second key further needs to be generated with reference to another parameter, for example, $K_{gNB}2=KDF$ (FC, P0, L0, P1, L1). In this case, P0 is a value of an uplink NAS counter corresponding to the second 3GPP access, L0 is a length of the value of the uplink NAS counter corresponding to the second 3GPP access, P1 is the second access type distinguisher, and L1 is a length of the second access type distinguisher. The AMF key herein is the same as the AMF key mentioned in S602 and the AMF key mentioned in S604, and all are the key $K_{AMF}$.

In addition, the AMF may further send a second registration accept message to the UE. Optionally, the second registration accept message may include the second access type distinguisher.

S607. The AMF sends the second key to the RAN 2. Correspondingly, the RAN 2 receives the second key from the AMF.

For example, the RAN 2 may generate a second RRC key and a second user plane key based on the received second key (for example, the $K_{gNB}2$). For example, the second RRC key includes a $K_{RRCenc}2$ and a $K_{RRCint}2$, and the second user plane key includes a $K_{UPenc}2$ and a $K_{UPint}2$.

Optionally, the AMF may further send the second access type distinguisher to the RAN 2. In addition, the RAN 2 may further send a second AS security mode command to the UE, where the second AS security mode command is used to notify the UE of an RRC signaling protection cryptography algorithm and/or a user plane protection cryptography algorithm that are/is selected by the network side. Optionally, the second AS security mode command may further include the second access type distinguisher. Further, after the UE performs S608 to generate the second key, the UE may further send a second AS security mode response to the RAN 2.

S608. The UE generates the second key based on the second access type distinguisher.

In a possible implementation, before generating the second key, the UE may further determine the second access type distinguisher for the second 3GPP access.

In an example, the UE determines, based on the first access type distinguisher in the security context for the UE, to allocate the second access type distinguisher to the second 3GPP access. The UE determines that the first access type distinguisher is one distinguisher in the dual-3GPP access type distinguisher, and allocates another distinguisher in the dual-3GPP access type distinguisher to the second 3GPP access as the second access type distinguisher, where the second access type distinguisher is an unused distinguisher in the dual-3GPP access type distinguisher. The first access type distinguisher is different from the second access type distinguisher. In this case, because the AMF and the UE have agreed in advance on the 1st allocated distinguisher in the dual-3GPP access type distinguisher in a protocol, and there are two distinguishers shown in Table 3 that are used to identify a dual-3GPP access type, it may be further ensured that second access type distinguishers allocated by the AMF and the UE for the second time are also the same.

In another example, the AMF sends the second registration accept message to the UE, where the second registration accept message includes the second access type distinguisher. Therefore, the UE may determine the second access type distinguisher based on the second registration accept message.

In still another example, the AMF sends the second access type distinguisher to the RAN 2, and the RAN 2 sends the second AS security mode command to the UE, where the second AS security mode command includes the second access type distinguisher. Therefore, the UE may determine the second access type distinguisher based on the second AS security mode command.

In addition, the UE further creates a pair of NAS counters for the second NAS connection corresponding to the second 3GPP access, and sets the pair of NAS counters to initial values. The UE stores parameters for the second NAS connection, where the parameters for the second NAS connection include the second access type distinguisher and the pair of NAS counters.

It may be understood that the UE maintains a set of security contexts for the UE for the first 3GPP access and the second 3GPP access. The security context for the UE includes parameters for two sets of NAS connections. The parameters for the first NAS connection include the first access type distinguisher and one pair of NAS counters, and the parameters for the second NAS connection include the second access type distinguisher and one pair of NAS counters.

In a possible implementation, the UE generates the second key, namely, the $K_{gNB}2$, based on an AMF key and the second access type distinguisher, and may further generate the second RRC key and the second user plane key based on the second key. A method for generating the second key by the AMF is the same as a method for generating the second key by the UE. Details are not described herein again. The AMF key herein is the same as the AMF key mentioned in S602, the AMF key mentioned in S604, and the AMF key mentioned in S606, and all are the key $K_{AMF}$.

It may be understood that a sequence of S606, S607, and S608 is not limited in this application.

Therefore, when the RAN 2 communicates with the UE, the RAN 2 and the UE may protect second RRC signaling by using the second RRC key, and protect second data by using the second user plane key.

According to the foregoing method, different access type distinguishers are used in two 3GPP access processes, so that it can be ensured that the first key is different from the second key, thereby achieving key isolation.

In addition, for the foregoing Example 1 and Example 2, in a possible implementation, the AMF performs security protection on first NAS signaling by using a NAS security protection key and a first bearer parameter, where the first NAS signaling corresponds to the first 3GPP access, and performs security protection on second NAS signaling by using the NAS security protection key and a second bearer parameter, where the second NAS signaling corresponds to the second 3GPP access. The first bearer parameter is the first access type distinguisher, and the second bearer parameter is the first access type distinguisher.

It can be learned from S501 that the NAS security protection key includes a NAS encryption key $K_{NASenc}$ and/or a NAS integrity protection key $K_{NASint}$. The first NAS signaling is NAS signaling that is transmitted between the AMF and the UE over the first 3GPP access. The second NAS signaling is NAS signaling that is transmitted between the AMF and the UE over the second 3GPP access.

For example, the AMF derives the NAS encryption key $K_{NASenc}$ and the NAS integrity protection key $K_{NASint}$ based on the $K_{AMF}$, performs confidentiality protection on the first NAS signaling based on the NAS encryption key $K_{NASenc}$ and the first access type distinguisher, performs integrity protection on the first NAS signaling based on the NAS integrity protection key $K_{NASint}$ and the first access type distinguisher, performs confidentiality protection on the second NAS signaling based on the NAS encryption key $K_{NASenc}$ and the second access type distinguisher, and performs integrity protection on the second NAS signaling based on the NAS integrity protection key $K_{NASint}$ and the second access type distinguisher.

For example, with reference to FIG. 3A, for the first 3GPP access, confidentiality protection is performed on the first NAS signaling based on the NAS encryption key $K_{NASenc}$ and a corresponding input parameter. The input parameter herein includes at least one of a value of a first counter, the first bearer parameter, a first direction parameter, and a first length parameter, and the first bearer parameter includes the first access type distinguisher. If the AMF performs confidentiality protection on the first NAS signaling, the first counter is a downlink NAS counter corresponding to the first 3GPP access, and the first direction parameter indicates downlink. If the UE performs confidentiality protection on the first NAS signaling, the first counter is the uplink NAS counter corresponding to the first 3GPP access, and the first direction parameter indicates uplink.

For the second 3GPP access, confidentiality protection is performed on the second NAS signaling based on the NAS encryption key $K_{NASenc}$ and a corresponding input parameter. The input parameter herein includes at least one of a value of a second counter, the second bearer parameter, a second direction parameter, and a second length parameter, and the second bearer parameter includes the second access type distinguisher. If the AMF performs confidentiality protection on the second NAS signaling, the second counter is a downlink NAS counter corresponding to the second 3GPP access, and the second direction parameter indicates downlink. If the UE performs confidentiality protection on the second NAS signaling, the second counter is the uplink NAS counter corresponding to the second 3GPP access, and the second direction parameter indicates uplink.

For another example, with reference to FIG. 3B, for the first 3GPP access, the AMF or the UE performs integrity protection on the second NAS signaling based on the NAS integrity protection key $K_{NASint}$ and a corresponding input parameter. The input parameter herein includes at least one of a value of a first counter, the first bearer parameter, a first direction parameter, and a first message parameter, and the first bearer parameter includes the first access type distinguisher. For the second 3GPP access, the AMF or the UE performs integrity protection on the second NAS signaling based on the NAS integrity protection key $K_{NASint}$ and a corresponding input parameter. The input parameter herein includes at least one of a value of a second counter, the second bearer parameter, a second direction parameter, and a second message parameter, and the second bearer parameter includes the second access type distinguisher.

According to the foregoing manner, different bearer parameters are used to avoid a problem that a key stream is reused because the two 3GPP accesses use a same NAS key.

Example 3

S701. The UE sends a first registration request message to the AMF via the RAN 1. Correspondingly, the AMF receives the first registration request message.

For specific content of S701, refer to S501.

A difference from S501 lies in that the first registration request message includes indication information. For the indication information, refer to related content in S505.

S702. The AMF generates a first key based on a third access type distinguisher and an identifier of a first 3GPP access.

In a possible implementation, before generating the first key, the AMF determines the identifier of the first 3GPP access for the first 3GPP access based on the indication information.

For example, the identifier of the first 3GPP access is a path identifier of the first 3GPP access, or another identifier used to identify the first 3GPP access, where the identifier of the first 3GPP access is different from an access type distinguisher. For example, the path identifier of the first 3GPP access is an identifier of a data transmission path between the UE and a UPF. For example, downlink data is used as an example. Downlink data from a DN arrives at a UPF 1, and is forwarded to the RAN 1 via a UPF 2. Then, the RAN 1 sends the downlink data to the UE. Therefore, it may be learned that a transmission path of the downlink data is UPF 1→UPF 2→RAN 1→UE. Similarly, it may be learned that a transmission path of uplink data is UE→RAN 1→UPF 2→UPF 1. The path identifier of the first 3GPP access is an identifier used to identify the transmission path of the uplink data and/or the transmission path of the downlink data. For example, the AMF may determine the identifier of the first 3GPP access for the first 3GPP access based on the indication information in, but not limited to, the following manners:

Manner a: The AMF may allocate the identifier of the first 3GPP access to the first 3GPP access based on the indication information. In this case, the AMF further needs to send the identifier of the first 3GPP access to the UE. For example, the AMF sends a first registration accept message to the UE, where the first registration accept message includes the identifier of the first 3GPP access. Alternatively, the AMF sends the identifier of the first 3GPP access to the RAN 1, and the RAN 1 includes the identifier of the first 3GPP access in a first AS security mode command, for notifying the UE of the identifier of the first 3GPP access.

Manner b: The AMF may obtain the identifier of the first 3GPP access from another core network element. In addition, the AMF further needs to send the identifier of the first 3GPP access to the UE. For example, the AMF sends a first registration accept message to the UE, where the first registration accept message includes the identifier of the first 3GPP access. Alternatively, the AMF sends the identifier of the first 3GPP access to the RAN 1, and the RAN 1 includes the identifier of the first 3GPP access in a first AS security mode command, for notifying the UE of the identifier of the first 3GPP access.

For example, the AMF may obtain two 3GPP access identifiers from a UDM. For example, the UDM configures, in subscription information, the two 3GPP access identifiers when the UE is to be connected to a network over two 3GPP accesses, and the two 3GPP access identifiers are different. The AMF sends a Nudm_UECM_Registration request message to the UDM, where the request message includes content of the indication information, so that the UDM may obtain the two 3GPP access identifiers from the subscription information based on the content of the indication information, and send the two 3GPP access identifiers to the AMF.

The AMF uses one of the two 3GPP access identifiers from the two received 3GPP access identifiers as the identifier of the first 3GPP access.

In an example, the UDM may further indicate an allocation order of the two 3GPP access identifiers, so that the AMF determines the identifier of the first 3GPP access for the first 3GPP access from the two 3GPP access identifiers based on the allocation order.

In another example, if the UDM returns the two 3GPP access identifiers but does not indicate an allocation order, the AMF may determine the identifier of the first 3GPP access for the first 3GPP access from the two 3GPP access identifiers. For example, the AMF may randomly select an identifier from the two 3GPP access identifiers as the identifier of the first 3GPP access.

Further, after the AMF determines the identifier of the first 3GPP access, the AMF may store the identifier of the first 3GPP access in a security context for the UE, and may further store another unallocated 3GPP access identifier in the security context for the UE.

Manner c: The first registration request message includes the identifier of the first 3GPP access, that is, the UE determines the identifier of the first 3GPP access.

For example, after determining the identifier of the first 3GPP access, the AMF may store the identifier of the first 3GPP access in a security context for the UE. In addition, the AMF creates a pair of NAS counters for a first NAS connection corresponding to the first 3GPP access, and sets the pair of NAS counters to initial values.

In a possible implementation, the AMF generates the first key based on an AMF key (for example, a $K_{AMF}$), the third access type distinguisher, and the identifier of the first 3GPP access. The third access type distinguisher is an access type distinguisher that is shown in Table 1 and that is used to identify 3GPP access. With reference to Table 1, it can be learned that the access type distinguisher herein may be 0x01, and the first key may be denoted as a $K_{gNB}1$.

In an example, the identifier of the first 3GPP access is used as a new input parameter used to generate the $K_{gNB}1$. In this case, $K_{gNB}1=KDF (FC, P0, L0, P1, L1, P2, L2)$, where P0 is a value of an uplink NAS counter corresponding to the first 3GPP access, L0 is a length of the value of the uplink NAS counter corresponding to the first 3GPP access, P1 is the third access type distinguisher, L1 is a length of the third access type distinguisher, P2 is the identifier of the first 3GPP access, and L2 is a length of the identifier of the first 3GPP access.

In another example, a definition of P1 is updated, and P1 is determined based on the identifier of the first 3GPP access and the third access type distinguisher. For example, if a result of connecting the identifier of the first 3GPP access and the third access type distinguisher is used as P1, $K_{gNB}1=KDF (FC, P0, L0, P1, L1)$, where P0 is a value of an uplink NAS counter corresponding to the first 3GPP access, L0 is a length of the value of the uplink NAS counter corresponding to the first 3GPP access, P1 is the third access type distinguisher‖the identifier of the first 3GPP access, and L1 is a length of the third access type distinguisher‖the identifier of the first 3GPP access.

In still another example, a definition of P1 is updated, and P1 is determined based on the identifier of the first 3GPP access. For example, if the identifier of the first 3GPP access is used as P1, $K_{gNB}1=KDF (FC, P0, L0, P1, L1)$, where P0 is a value of an uplink NAS counter corresponding to the first 3GPP access, L0 is a length of the value of the uplink NAS counter corresponding to the first 3GPP access, P1 is the identifier of the first 3GPP access, and L1 is a length of the identifier of the first 3GPP access.

It may be understood that the foregoing examples are merely examples and are not intended to limit this application. The $K_{gNB}1$ may be generated based on one or more parameters of the value of the uplink NAS counter corresponding to the first 3GPP access, the length of the value of the uplink NAS counter corresponding to the first 3GPP access, the identifier of the first 3GPP access, the length of the identifier of the first 3GPP access, the third access type distinguisher, and the length of the third access type distinguisher.

In a possible implementation, a field may be further added to the security context for the UE. For example, the field is denoted as a first field. For example, the first field may include 1 bit. When a value of the 1 bit is 1, it indicates that the UE is connected to the network over two 3GPP accesses or an access type (or a registration type) of the UE is dual-3GPP access or multi-3GPP access. When the value of the 1 bit is 0, it indicates that the UE is not connected to the network over two 3GPP accesses or the access type (or the registration type) of the UE is non-dual-3GPP access or non-multi-3GPP access. The AMF may determine a value of the first field based on the indication information.

In addition, the AMF may further send the first registration accept message to the UE via the RAN 1. Optionally, the first registration accept message includes the identifier of the first 3GPP access.

S703. The AMF sends the first key to the RAN 1. Correspondingly, the RAN 1 receives the first key from the AMF.

For example, the RAN 1 may generate a first RRC key and a first user plane key based on the received first key (for example, the $K_{gNB}1$). For example, the first RRC key includes a $K_{RRCenc}1$ and a $K_{RRCint}1$, and the first user plane key includes a $K_{UPenc}1$ and a $K_{UPint}1$.

Optionally, the AMF may further send a first access type distinguisher to the RAN 1. In addition, the RAN 1 may further send the first AS security mode command to the UE, where the first AS security mode command is used to notify the UE of an RRC signaling protection cryptography algorithm and/or a user plane protection cryptography algorithm that are/is selected by the network side. Optionally, the first AS security mode command may further include the first access type distinguisher. Further, after the UE performs S704 to generate the first key, the UE may further send a first AS security mode response to the RAN 1.

S704. The UE generates a first key based on a third access type distinguisher and the identifier of the first 3GPP access.

In a possible design, before generating the first key, the UE determines the identifier of the first 3GPP access.

In an example, the UE has known that the UE is connected to the network over two 3GPP accesses, and the first 3GPP access is a $1^{st}$ 3GPP access. In this case, before generating the first key, the UE determines the identifier of the first 3GPP for the first 3GPP access. For example, the UE may determine the identifier of the first 3GPP access by itself. In this case, the first registration request message may include the identifier of the first 3GPP access.

In another example, the UE receives the first registration accept message from the AMF, where the first registration accept message includes the identifier of the first 3GPP access.

In still another example, the UE receives the first AS security mode command from the RAN 1, where the first AS security mode command includes the identifier of the first 3GPP access.

In addition, the UE further creates a pair of NAS counters for the first NAS connection corresponding to the first 3GPP access, and sets the pair of NAS counters to initial values.

Further, in a possible design, the UE generates the first key, namely, the $K_{gNB}1$, based on an AMF key, the third access type distinguisher, and the identifier of the first 3GPP access, and may further generate the first RRC key and the first user plane key based on the first key. A method for generating the first key by the AMF is the same as a method for generating the first key by the UE. Details are not described herein again.

It may be understood that a sequence of S702, S703, and S704 is not limited in this application.

Therefore, when the RAN 1 communicates with the UE, the RAN 1 and the UE may protect first RRC signaling by using the first RRC key, and protect first data by using the first user plane key.

S705. The UE sends a second registration request message to the AMF. Correspondingly, the AMF receives the second registration request message.

The second registration request message is used by the UE to request to register to the network over a second 3GPP access. Optionally, the second registration request message may also include indication information. In addition, for other content of the second registration request message, refer to S505.

S706. The AMF generates a second key based on the third access type distinguisher and an identifier of the second 3GPP access.

In a possible implementation, after the AMF successfully authenticates an identity of the UE and before the AMF generates the second key, the AMF determines the identifier of the second 3GPP for the second 3GPP access. Specifically, the AMF may determine the identifier of the second 3GPP access in, but not limited to, the following manners:

Manner a: If the security context for the UE includes the first field, the AMF determines, based on the first field in the security context for the UE, that the UE is to be connected to the network over two 3GPP accesses, or if the second registration request message includes the indication information, the AMF determines, based on the indication information, that the UE is to be connected to the network over two 3GPP accesses, and the AMF may further allocate the identifier of the second 3GPP access to the second 3GPP access. In this case, the AMF further needs to send the identifier of the second 3GPP access to the UE. For example, the AMF sends a second registration accept message to the UE, where the second registration accept message includes the identifier of the second 3GPP access. Alternatively, the AMF sends the identifier of the second 3GPP access to the RAN 2, and the RAN 2 includes the identifier of the second 3GPP access in a second AS security mode command, for notifying the UE of the identifier of the second 3GPP access.

Manner b: If the AMF obtains an unallocated 3GPP access identifier based on the security context for the UE, and determines that the UE is to be connected to the network over two 3GPP accesses, the AMF further uses the unallocated 3GPP access identifier as the identifier of the second 3GPP. In this case, the AMF further needs to send the identifier of the second 3GPP access to the UE. For example, the AMF sends a second registration accept message to the UE, where the second registration accept message includes the identifier of the second 3GPP access. Alternatively, the AMF sends the identifier of the second 3GPP access to the RAN 2, and the RAN 2 includes the identifier of the second 3GPP access in a second AS security mode command, for notifying the UE of the identifier of the second 3GPP access.

Manner c: The second registration request message includes the identifier of the second 3GPP access, that is, the UE allocates the identifier of the second 3GPP access. In this case, the AMF determines, based on the identifier of the second 3GPP access in the second registration request message, that the UE is to be connected to the network over two 3GPP accesses, and determines the identifier of the second 3GPP access.

In addition, the AMF stores the identifier of the second 3GPP access in the context for the UE. The AMF further creates a pair of NAS counters for the first NAS connection corresponding to the second 3GPP access, and sets the pair of NAS counters to initial values.

It may be understood that the AMF maintains a set of security contexts for the UE for the first 3GPP access and the second 3GPP access. The security context for the UE includes parameters for two sets of NAS connections. The parameters for the first NAS connection include the identifier of the first 3GPP access, the third access type distinguisher, and one pair of NAS counters, and the parameters for the second NAS connection include the identifier of the second 3GPP access, the third access type distinguisher, and one pair of NAS counters.

For example, the AMF generates the second key based on an AMF key (for example, the $K_{AMF}$), the third access type distinguisher, and the identifier of the second 3GPP access. The third access type distinguisher is an access type distinguisher that is shown in Table 1 and that is used to identify 3GPP access. With reference to Table 1, it can be learned that the access type distinguisher herein may be 0x01, and the second key may be denoted as a $K_{gNB}2$.

In an example, the identifier of the second 3GPP access is used as a new input parameter used to generate the $K_{gNB}2$. In this case, $K_{gNB2}$=KDF (FC, P0, L0, P1, L1, P2, L2), where P0 is a value of an uplink NAS counter corresponding to the second 3GPP access, L0 is a length of the value of the uplink NAS counter corresponding to the second 3GPP access, P1 is the third access type distinguisher, L1 is a length of the third access type distinguisher, P2 is the identifier of the second 3GPP access, and L2 is a length of the identifier of the second 3GPP access.

In another example, a definition of P1 is updated, and P1 is determined based on the identifier of the second 3GPP access and the third access type distinguisher. For example, if a result of connecting the identifier of the second 3GPP access and the third access type distinguisher is used as P1, $K_{gNB2}$=KDF (FC, P0, L0, P1, L1), where P0 is a value of an uplink NAS counter corresponding to the second 3GPP access, L0 is a length of the value of the uplink NAS counter corresponding to the second 3GPP access, P1 is the third access type distinguisher‖the identifier of the second 3GPP access, and L1 is a length of the third access type distinguisher‖the identifier of the second 3GPP access.

In still another example, a definition of P1 is updated, and P1 is determined based on the identifier of the second 3GPP access. For example, if the identifier of the second 3GPP access is used as P1, $K_{gNB}2$=KDF (FC, P0, L0, P1, L1), where P0 is a value of an uplink NAS counter corresponding to the second 3GPP access, L0 is a length of the value of the uplink NAS counter corresponding to the second 3GPP access, P1 is the identifier of the second 3GPP access, and L1 is a length of the identifier of the second 3GPP access.

It may be understood that the foregoing examples are merely examples and are not intended to limit this application. The $K_{gNB}2$ may be generated based on one or more parameters of the value of the uplink NAS counter corresponding to the second 3GPP access, the length of the value of the uplink NAS counter corresponding to the second 3GPP access, the identifier of the second 3GPP access, the length of the identifier of the second 3GPP access, the third access type distinguisher, and the length of the third access type distinguisher.

S707. The AMF sends the second key to the RAN 2. Correspondingly, the RAN 2 receives the second key from the AMF.

For example, the RAN 2 may generate a second RRC key and a second user plane key based on the received second key (for example, the $K_{gNB}2$). For example, the second RRC key includes a $K_{RRCenc}2$ and a $K_{RRCint}2$, and the second user plane key includes a $K_{UPenc}2$ and a $K_{UPint}2$.

Optionally, the AMF may further send a second access type distinguisher to the RAN 2. In addition, the RAN 2 may further send the second AS security mode command to the UE, where the second AS security mode command is used to notify the UE of an RRC signaling protection cryptography algorithm and/or a user plane protection cryptography algorithm that are/is selected by the network side. Optionally, the second AS security mode command may further include the second access type distinguisher. Further, after the UE performs S708 to generate the second key, the UE may further send a second AS security mode response to the RAN 2.

S708. The UE generates the second key based on the third access type distinguisher and the identifier of the second 3GPP access.

In a possible implementation, before generating the second key, the UE determines the identifier of the second 3GPP access.

In an example, the UE has known that the UE is connected to the network over two 3GPP accesses, and the second 3GPP access is a $2^{nd}$ 3GPP access. In this case, before generating the second key, the UE determines the identifier of the second 3GPP for the second 3GPP access. For example, the UE may allocate that of the second 3GPP access by itself.

In another example, the UE receives the second registration accept message from the AMF, where the second registration accept message includes the identifier of the second 3GPP access.

In still another example, the UE receives the second AS security mode command from the RAN 2, where the second AS security mode command includes the identifier of the second 3GPP access.

The UE further creates a pair of NAS counters for the second NAS connection corresponding to the second 3GPP access, and sets the pair of NAS counters to initial values.

It may be understood that the UE maintains a set of security contexts for the UE for the first 3GPP access and the second 3GPP access. The security context for the UE includes parameters for two sets of NAS connections. The parameters for the first NAS connection include the identifier of the first 3GPP access, the third access type distinguisher, and one pair of NAS counters, and the parameters for the second NAS connection include the identifier of the second 3GPP access, the third access type distinguisher, and one pair of NAS counters.

Further, the UE generates the second key, namely, the $K_{gNB}2$, based on an AMF key, the third access type distinguisher, and the identifier of the second 3GPP access, and may further generate the second RRC key and the second user plane key based on the second key. A method for generating the second key by the AMF is the same as a method for generating the second key by the UE. Details are not described herein again.

It may be understood that a sequence of S706, S707, and S708 is not limited in this application.

Therefore, when the RAN 2 communicates with the UE, the RAN 2 and the UE may protect second RRC signaling by using the second RRC key, and protect second data by using the second user plane key.

According to the foregoing method, new identifiers are allocated to different 3GPP accesses in two 3GPP access processes, so that it can be ensured that the first key is different from the second key, thereby achieving key isolation.

In addition, in a possible implementation, the AMF performs security protection on first NAS signaling by using a NAS security protection key and a first bearer parameter, where the first NAS signaling corresponds to the first 3GPP access, and performs security protection on second NAS signaling by using the NAS security protection key and a second bearer parameter, where the second NAS signaling corresponds to the second 3GPP access. That the first bearer parameter corresponds to the identifier of the first 3GPP access may be understood as that the first bearer parameter is determined based on the identifier of the first 3GPP access. For example, the first bearer parameter is the identifier of the first 3GPP access or is determined based on the identifier of the first 3GPP access and the third access type distinguisher. That the second bearer parameter corresponds to the identifier of the second 3GPP access may be understood as that the second bearer parameter is determined based on the identifier of the second 3GPP access. For example, the second bearer parameter is the identifier of the second 3GPP access or is determined based on the identifier of the second 3GPP access and the third access type distinguisher.

For example, the AMF derives a NAS encryption key $K_{NASenc}$ and a NAS integrity protection key $K_{NASint}$ based on the $K_{AMF}$, performs confidentiality protection on the first NAS signaling based on the NAS encryption key $K_{NASenc}$ and the first bearer parameter, performs integrity protection on the first NAS signaling based on the NAS integrity protection key $K_{NASint}$ and the first bearer parameter, performs confidentiality protection on the second NAS signaling based on the NAS encryption key $K_{NASenc}$ and the second bearer parameter, and performs integrity protection on the second NAS signaling based on the NAS integrity protection key $K_{NASint}$ and the second bearer parameter.

Therefore, different bearer parameters are used to avoid a problem that a key stream is reused because the two 3GPP accesses use a same NAS key.

Example 4

S801. The UE sends a first registration request message to the AMF via the RAN 1. Correspondingly, the AMF receives the first registration request message.

For specific content of S801, refer to S501.

Optionally, the first registration request message includes indication information. For the indication information, refer to related content in S505.

S802. The AMF generates a first key based on a first value of an uplink NAS counter.

For example, the AMF allocates a third access type distinguisher to a first NAS connection corresponding to a first 3GPP access, creates a pair of NAS counters, and set the pair of NAS counters to initial values. The pair of NAS counters includes an uplink NAS counter and a downlink NAS counter. The AMF stores parameters for the first NAS connection in a security context for the UE. The parameters for the first NAS connection include the third access type distinguisher and the pair of NAS counters. The third access type distinguisher is an access type distinguisher that is shown in Table 1 and that is used to identify 3GPP access. With reference to Table 1, it can be learned that the access type distinguisher herein may be 0x01.

In a possible implementation, the AMF generates the first key based on an AMF key (for example, a $K_{AMF}$) and the first value of the uplink NAS counter. The first key may be denoted as a $K_{gNB}1$. It may be understood that the first key further needs to be generated with reference to another parameter, for example, $K_{gNB}1=KDF (FC, P0, L0, P1, L1)$. In this case, P0 is the first value of the uplink NAS counter, L0 is a length of the first value of the uplink NAS counter, P1 is the third access type distinguisher, and L1 is a length of the third access type distinguisher. For details, refer to the foregoing related content. Details are not described herein again.

In addition, the AMF may further send a first registration accept message to the UE via the RAN 1.

S803. The AMF sends the first key to the RAN 1. Correspondingly, the RAN 1 receives the first key from the AMF.

For example, the RAN 1 may generate a first RRC key and a first user plane key based on the received first key (for example, the $K_{gNB}1$). For example, the first RRC key includes a $K_{RRCenc}1$ and a $K_{RRCint}1$, and the first user plane key includes a $K_{UPenc}1$ and a $K_{UPint}1$.

In addition, the RAN 1 may further send an AS security mode command to the UE, where the AS security mode command is used to notify the UE of an RRC signaling protection key algorithm and/or a user plane protection cryptography algorithm that are/is selected by the network side. Further, after the UE performs S804 to generate the first key, the UE may further send an AS security mode response to the RAN 1.

S804. The UE generates the first key based on the first value of the uplink NAS counter.

For example, the UE further creates a pair of NAS counters for the first NAS connection corresponding to the first 3GPP access, and sets the pair of NAS counters to initial values. The UE stores parameters for the first NAS connection, where the parameters for the first NAS connection include the third access type distinguisher and the pair of NAS counters. The pair of NAS counters includes an uplink NAS counter and a downlink NAS counter.

Further, in a possible implementation, the UE generates the first key, namely, the $K_{gNB}1$, based on an AMF key and the first value of the uplink NAS counter, and may further generate the first RRC key and the first user plane key based on the first key. A method for generating the first key by the AMF is the same as a method for generating the first key by the UE. Details are not described herein again.

It may be understood that a sequence of S802, S803, and S804 is not limited in this application.

Therefore, when the RAN 1 communicates with the UE, the RAN 1 and the UE may protect second RRC signaling by using the first RRC key, and protect second data by using the first user plane key.

S805. The UE sends a second registration request message to the AMF. Correspondingly, the AMF receives the second registration request message.

The second registration request message is used by the UE to request to register to a network over a second 3GPP access.

Optionally, the second registration request message includes indication information. In addition, for other content of the second registration request message, refer to S505.

S806. The AMF generates a second key based on a second value of the uplink NAS counter.

For example, the AMF does not create a new pair of NAS counters for a second NAS connection corresponding to the second 3GPP access, but still uses the created NAS counters. The AMF generates the second key based on an AMF key (for example, the $K_{AMF}$) and the second value of the uplink NAS counter. The second key may be denoted as a $K_{gNB}2$. It may be understood that the second key further needs to be generated with reference to another parameter. It may be understood that the second key further needs to be generated with reference to another parameter, for example, $K_{gNB}2=KDF (FC, P0, L0, P1, L1)$. In this case, P0 is the second value of the uplink NAS counter, L0 is a length of the second value of the uplink NAS counter, P1 is the third access type distinguisher, and L1 is a length of the third access type distinguisher.

In addition, the AMF may further send a second registration accept message to the UE via the RAN 2.

S807. The AMF sends the second key to the RAN 2. Correspondingly, the RAN 2 receives the second key from the AMF.

For example, the RAN 2 may generate a second RRC key and a second user plane key based on the received second key (for example, the $K_{gNB}2$). For example, the second RRC key includes a $K_{RRCenc}2$ and a $K_{RRCint}2$, and the second user plane key includes a $K_{UPenc}2$ and a $K_{UPint}2$.

In addition, the RAN 2 may further send an AS security mode command to the UE, where the AS security mode command is used to notify the UE of an RRC signaling protection cryptography algorithm and/or a user plane protection cryptography algorithm that are/is selected by the network side. Further, after the UE performs S808 to generate the second key, the UE may further send an AS security mode response to the RAN 2.

S808. The UE generates the second key based on the second value of the uplink NAS counter.

For example, the UE does not create a new pair of NAS counters for the second NAS connection corresponding to the second 3GPP access, but still uses the created NAS counters. The UE generates the second key, namely, the $K_{gNB}2$, based on an AMF key (for example, the $K_{AMF}$) and the second value of the uplink NAS counter, and may further generate the second RRC key and the second user plane key based on the second key. A method for generating the second key by the AMF is the same as a method for generating the second key by the UE.

It may be understood that a sequence of S806, S807, and S808 is not limited in this application.

Therefore, when the RAN 2 communicates with the UE, the RAN 2 and the UE may protect second RRC signaling by using the second RRC key, and protect second data by using the second user plane key.

According to the foregoing method, different values of a same uplink NAS counter are used in two 3GPP access processes, so that it can be ensured that the first key is different from the second key, thereby achieving key isolation.

In addition, after generating the second key, the AMF and the UE may further create a new pair of NAS counters for the second NAS connection corresponding to the second 3GPP access, and set the new pair of NAS counters to initial values. Two sets of NAS counters are used, so that the AMF can better distinguish between packets from the RAN 1 and the RAN 2, and can better determine an order of the packet from the RAN 1 and an order of the packet from the RAN 2.

It may be understood that, to implement the functions in the foregoing embodiments, the terminal device or the access and mobility management network element includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

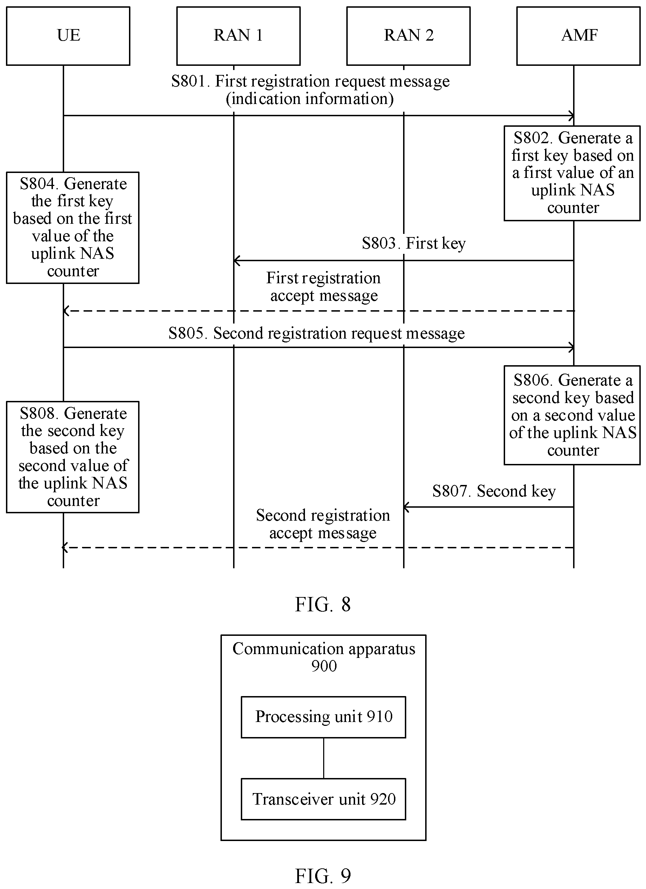

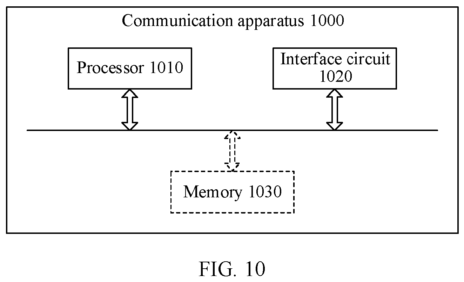

FIG. 9 and FIG. 10 are diagrams of a structure of a possible communication apparatus according to an embodiment of this application. The communication apparatuses may be configured to implement a function of the terminal device or the access and mobility management network element in the foregoing method embodiment. Therefore, the beneficial effects of the foregoing method embodiment can also be achieved.

As shown in FIG. 9, a communication apparatus 900 includes a processing unit 910 and a transceiver unit 920. The communication apparatus 900 is configured to implement the function of the terminal device or the access and mobility management network element in the method embodiment shown in FIG. 5, FIG. 6, FIG. 7, or FIG. 8.

When the communication apparatus 900 is configured to implement the function of the access and mobility management network element in the method embodiment shown in FIG. 5, FIG. 6, FIG. 7, or FIG. 8:

The transceiver unit 920 is configured to receive a first registration request message from a terminal device, where the first registration request message is used by the terminal device to request to register to a network over a first 3rd generation partnership project 3GPP access. The processing unit 910 is configured to generate a first key, where the first key is a key used for communication between the terminal device and a first access network device, and the first access network device is used for the first 3GPP access. The transceiver unit 920 is configured to send the first key to the first access network device; and receive a second registration request message from the terminal device, where the second registration request message is used by the terminal device to request to register to the network over a second 3GPP access. The processing unit 910 is configured to generate a second key, where the second key is a key used for communication between the terminal device and a second access network device, the second access network device is used for the second 3GPP access, and the first key is different from the second key. The transceiver unit 920 is configured to send the second key to the second access network device.

In a possible design, the first registration request message and/or the second registration request message include/includes indication information, and the indication information indicates that the terminal device is to be connected to the network over two 3GPP accesses.

In a possible design, the processing unit 910 is configured to: during generation of the first key, generate the first key based on a first access type distinguisher corresponding to the first 3GPP access; and during generation of the second key, generate the second key based on a second access type distinguisher corresponding to the second 3GPP access, where the first access type distinguisher is different from the second access type distinguisher.

In a possible design, the second registration request message includes the indication information; and the processing unit 910 is configured to: before generating the second key, determine the second access type distinguisher for the second 3GPP access based on the indication information.

In a possible design, the first registration request message includes the indication information; and the processing unit 910 is configured to: before generating the first key, determine the first access type distinguisher for the first 3GPP access based on the indication information, where the first access type distinguisher is one distinguisher in a dual-3GPP access type distinguisher; and before generating the second key, determine the second access type distinguisher for the second 3GPP access, where the second access type distinguisher is another distinguisher in the dual-3GPP access type distinguisher.

In a possible design, the second access type distinguisher is an unused distinguisher in the dual-3GPP access type distinguisher.

In a possible design, the transceiver unit 920 is configured to: send a first registration accept message to the terminal device, where the first registration accept message includes the first access type distinguisher; and/or send a second registration accept message to the terminal device, where the first registration accept message includes the second access type distinguisher.

In a possible design, a first bearer parameter includes the first access type distinguisher, and a second bearer parameter includes the second access type distinguisher; and the processing unit 910 is configured to: perform security protection on first NAS signaling by using a NAS security protection key and the first bearer parameter, where the first NAS signaling corresponds to the first 3GPP access; and perform security protection on second NAS signaling by using the NAS security protection key and the second bearer parameter, where the second NAS signaling corresponds to the second 3GPP access.

In a possible design, the processing unit 910 is configured to: during generation of the first key, generate the first key based on a third access type distinguisher and an identifier of the first 3GPP access, where the third access type distinguisher indicates that an access type is 3GPP access; and during generation of the second key, generate the second key based on the third access type distinguisher and an identifier of the second 3GPP access, where the identifier of the first 3GPP access is different from the identifier of the second 3GPP access.

In a possible design, the first registration request message includes the indication information; and the processing unit 910 is configured to: before generating the first key, determine the identifier of the first 3GPP access for the first 3GPP access based on the indication information; and before generating the second key, determine the identifier of the second 3GPP access for the second 3GPP access.

In a possible design, the transceiver unit 920 is configured to: when the identifier of the first 3GPP access is determined for the first 3GPP access based on the indication information, obtain two 3GPP access identifiers from a data management network element based on the indication information; use one of the two 3GPP access identifiers as the identifier of the first 3GPP access; and when the identifier of the second 3GPP access is determined for the second 3GPP access, use the other one of the two 3GPP access identifiers as the identifier of the second 3GPP access.

In a possible design, the transceiver unit 920 is configured to: send a first registration accept message to the terminal device, where the first registration accept message includes the identifier of the first 3GPP access; and send a second registration accept message to the terminal device, where the second registration accept message includes the identifier of the second 3GPP access.

In a possible design, the first registration request message includes the identifier of the first 3GPP access, and the second registration request message includes the identifier of the second 3GPP access.

In a possible design, a first bearer parameter corresponds to the identifier of the first 3GPP access, and a second bearer parameter corresponds to the identifier of the second 3GPP access; and the processing unit 910 is configured to: perform security protection on first NAS signaling by using a NAS security protection key and the first bearer parameter, where the first NAS signaling corresponds to the first 3GPP access; and perform security protection on second NAS signaling by using the NAS security protection key and the second bearer parameter, where the second NAS signaling corresponds to the second 3GPP access.

In a possible design, the processing unit 910 is configured to: during generation of the first key, generate the first key based on a first value of an uplink NAS counter; and during generation of the second key, generate the second key based on a second value of the uplink NAS counter, where the first 3GPP access and the second 3GPP access share the uplink NAS counter, and the first value is different from the second value.

When the communication apparatus 900 is configured to implement the function of the terminal device in the method embodiment shown in FIG. 5, FIG. 6, FIG. 7, or FIG. 8:

The transceiver unit 920 is configured to send a first registration request message to an access and mobility management network element, where the first registration request message is used by the terminal device to request to register to a network over a first 3GPP access. The processing unit 910 is configured to generate a first key, where the first key is a key used for communication between the terminal device and a first access network device, and the first access network device is used for the first 3GPP access. The transceiver unit 920 is configured to send a second registration request message to the access and mobility management network element, where the second registration request message is used by the terminal device to request to register to the network over a second 3GPP access. The processing unit 910 is configured to generate a second key, where the second key is a key used for communication between the terminal device and a second access network device, the second access network device is used for the second 3GPP access, and the first key is different from the second key.

In a possible design, the first registration request message and/or the second registration request message include/includes indication information, and the indication information indicates that the terminal device is to be connected to the network over two 3GPP accesses.

In a possible design, the processing unit 910 is configured to: during generation of the first key, generate the first key based on a first access type distinguisher corresponding to the first 3GPP access; and during generation of the second key, generate the second key based on a second access type distinguisher corresponding to the second 3GPP access, where the first access type distinguisher is different from the second access type distinguisher.

In a possible design, the processing unit 910 is configured to: before generating the first key, determine the first access type distinguisher for the first 3GPP access, where the first access type distinguisher is one distinguisher in a dual-3GPP access type distinguisher; and before generating the second key, determine the second access type distinguisher for the second 3GPP access, where the second access type distinguisher is another distinguisher in the dual-3GPP access type distinguisher.

In a possible design, the second access type distinguisher is an unused distinguisher in the dual-3GPP access type distinguisher.

In a possible design, the transceiver unit 920 is configured to: receive a first registration accept message from the access and mobility management network element, where the first registration accept message includes the first access type distinguisher; and/or receive a second registration accept message from the access and mobility management network element, where the first registration accept message includes the second access type distinguisher.

In a possible design, the transceiver unit 920 is configured to: receive a first AS security mode command from the first access network device, where the first AS security mode command includes the first access type distinguisher; and/or receive a second AS security mode command from the second access network device, where the second AS security mode command includes the second access type distinguisher.

In a possible design, a first bearer parameter includes the first access type distinguisher, and a second bearer parameter includes the second access type distinguisher; and the processing unit 910 is configured to: perform security protection on first NAS signaling by using a NAS security protection key and the first bearer parameter, where the first NAS signaling corresponds to the first 3GPP access; and perform security protection on second NAS signaling by using the NAS security protection key and the second bearer parameter, where the second NAS signaling corresponds to the second 3GPP access.

In a possible design, the processing unit 910 is configured to: during generation of the first key, generate the first key based on a third access type distinguisher and an identifier of the first 3GPP access, where the third access type distinguisher indicates that an access type is 3GPP access; and during generation of the second key, generate the second key based on the third access type distinguisher and an identifier of the second 3GPP access, where the identifier of the first 3GPP access is different from the identifier of the second 3GPP access.

In a possible design, the processing unit 910 is configured to: before generating the first key, determine the identifier of the first 3GPP access for the first 3GPP access; and before generating the second key, determine the identifier of the second 3GPP access for the second 3GPP access.

In a possible design, the transceiver unit 920 is configured to: receive a first registration accept message from the access and mobility management network element, where the first registration accept message includes the identifier of the first 3GPP access; and receive a second registration accept message sent from the access and mobility management network element, where the second registration accept message includes the identifier of the second 3GPP access.

In a possible design, the transceiver unit 920 is configured to: receive a first AS security mode command from the first access network device, where the first AS security mode command includes the identifier of the first 3GPP access; and/or receive a second AS security mode command from the second access network device, where the second AS security mode command includes the identifier of the second 3GPP access.

In a possible design, the first registration request message includes the identifier of the first 3GPP access, and the second registration request message includes the identifier of the second 3GPP access.

In a possible design, a first bearer parameter corresponds to the identifier of the first 3GPP access, and a second bearer parameter corresponds to the identifier of the second 3GPP access; and the processing unit 910 is configured to: perform security protection on first NAS signaling by using a NAS security protection key and the first bearer parameter, where the first NAS signaling corresponds to the first 3GPP access; and perform security protection on second NAS signaling by using the NAS security protection key and the second bearer parameter, where the second NAS signaling corresponds to the second 3GPP access.

In a possible design, the processing unit 910 is configured to: during generation of the first key, generate the first key based on a first value of an uplink NAS counter; and during generation of the second key, generate the second key based on a second value of the uplink NAS counter, where the first 3GPP access and the second 3GPP access share the uplink NAS counter, and the first value is different from the second value.

For more detailed descriptions of the processing unit 910 and the transceiver unit 920, directly refer to related descriptions in the method embodiment shown in FIG. 5, FIG. 6, FIG. 7, or FIG. 8. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, store input data needed by the processor 1010 to run instructions, or store data generated after the processor 1010 runs instructions.

When the communication apparatus 1000 is configured to implement the method shown in FIG. 5, FIG. 6, FIG. 7, or FIG. 8, the processor 1010 is configured to implement a function of the processing unit 910, and the interface circuit 1020 is configured to implement a function of the transceiver unit 920.

It may be understood that, the processor in embodiments of this application may be a central processing unit (Central Processing Unit, CPU) 910, or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

This application provides another example of an apparatus. The communication apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiments. An example in which the communication apparatus includes a processor and a memory is used. As shown in FIG. 10, the communication apparatus 1000 includes a processor 1010 and a memory 1030. The processor 1010 is coupled to the memory 1030. The memory 1030 stores instructions. When the instructions stored in the memory 1030 is executed by the processor 1010, the communication apparatus 1000 performs the method performed by the terminal device or the access and mobility management network element in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in the terminal device or the access and mobility management network element. Alternatively, the processor and the storage medium may exist in the terminal device or the access and mobility management network element as discrete components.

All or a part of the foregoing embodiments may be implemented by software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof to form a new embodiment.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A key derivation method, comprising:

    receiving a first registration request message from a terminal device, wherein the first registration request message is used by the terminal device to request to register to a network over a first 3rd generation partnership project 3GPP access;
    generating a first key, wherein the first key is a key used for communication between the terminal device and the first access network device, and the first access network device is used for the first 3GPP access;
    sending the first key to the first access network device;
    receiving a second registration request message from the terminal device, wherein the second registration request message is used by the terminal device to request to register to the network over a second 3GPP access;
    generating a second key, wherein the second key is a key used for communication between the terminal device and the second access network device, the second access network device is used for the second 3GPP access, and the first key is different from the second key; and sending the second key to the second access network device.

2. The method according to claim 1, wherein the first registration request message and/or the second registration request message comprise/comprises indication information, and the indication information indicates that the terminal device is to be connected to the network over two 3GPP accesses.

3. The method according to claim 1 or 2, wherein generating the first key comprises:

    generating the first key based on a first access type distinguisher corresponding to the first 3GPP access; and
    generating the second key comprises:
    generating the second key based on a second access type distinguisher corresponding to the second 3GPP access, wherein the first access type distinguisher is different from the second access type distinguisher.

4. The method according to claim 3, wherein the second registration request message comprises the indication information; and
before generating the second key, the method further comprises:
determining the second access type distinguisher for the second 3GPP access based on the indication information.

5. The method according to claim 3, wherein the first registration request message comprises the indication information;
before generating the first key, the method further comprises:

    determining the first access type distinguisher for the first 3GPP access based on the indication information, wherein the first access type distinguisher is one distinguisher in a dual-3GPP access type distinguisher; and
    before generating the second key, the method further comprises:
    determining the second access type distinguisher for the second 3GPP access, wherein the second access type distinguisher is another distinguisher in the dual-3GPP access type distinguisher.

6. The method according to claim 5, wherein the second access type distinguisher is an unused distinguisher in the dual-3GPP access type distinguisher.

7. The method according to any one of claims 3 to 6, further comprising:
sending a first registration accept message to the terminal device, wherein the first registration accept message comprises the first access type distinguisher; and/or sending a second registration accept message to the terminal device, wherein the second registration accept message comprises the second access type distinguisher.

8. The method according to any one of claims 3 to 7, wherein a first bearer parameter comprises the first access type distinguisher, and a second bearer parameter comprises the second access type distinguisher; and
the method further comprises:

    performing security protection on first non-access stratum NAS signaling by using a NAS security protection key and the first bearer parameter, wherein the first NAS signaling corresponds to the first 3GPP access; and
    performing security protection on second NAS signaling by using the NAS security protection key and the second bearer parameter, wherein the second NAS signaling corresponds to the second 3GPP access.

9. The method according to claim 1 or 2, wherein generating the first key comprises:

    generating the first key based on a third access type distinguisher and an identifier of the first 3GPP access, wherein the third access type distinguisher indicates that an access type is 3GPP access; and
    generating the second key comprises:
    generating the second key based on the third access type distinguisher and an identifier of the second 3GPP access, wherein the identifier of the first 3GPP access is different from the identifier of the second 3GPP access.

10. The method according to claim 9, wherein the first registration request message comprises the indication information;
before generating the first key, the method further comprises:

    determining the identifier of the first 3GPP access for the first 3GPP access based on the indication information; and
    before generating the second key, the method further comprises:
    determining the identifier of the second 3GPP access for the second 3GPP access.

11. The method according to claim 10, wherein determining the identifier of the first 3GPP access for the first 3GPP access based on the indication information comprises:

> obtaining two 3GPP access identifiers from a data management network element based on the indication information; and
> using one of the two 3GPP access identifiers as the identifier of the first 3GPP access; and
> determining the identifier of the second 3GPP access for the second 3GPP access comprises:
> using the other one of the two 3GPP access identifiers as the identifier of the second 3GPP access.

12. The method according to any one of claims 9 to 11, further comprising:
sending a first registration accept message to the terminal device, wherein the first registration accept message comprises the identifier of the first 3GPP access; and sending a second registration accept message to the terminal device, wherein the second registration accept message comprises the identifier of the second 3GPP access.

13. The method according to claim 9, wherein the first registration request message comprises the identifier of the first 3GPP access, and the second registration request message comprises the identifier of the second 3GPP access.

14. The method according to any one of claims 9 to 13, wherein a first bearer parameter corresponds to the identifier of the first 3GPP access, and a second bearer parameter corresponds to the identifier of the second 3GPP access; and
the method further comprises:

> performing security protection on first NAS signaling by using a NAS security protection key and the first bearer parameter, wherein the first NAS signaling corresponds to the first 3GPP access; and
> performing security protection on second NAS signaling by using the NAS security protection key and the second bearer parameter, wherein the second NAS signaling corresponds to the second 3GPP access.

15. The method according to claim 1 or 2, wherein generating the first key comprises:

> generating the first key based on a first value of an uplink NAS counter; and
> generating the second key comprises:
> generating the second key based on a second value of the uplink NAS counter, wherein the first 3GPP access and the second 3GPP access share the uplink NAS counter, and the first value is different from the second value.

16. A key derivation method, comprising:

> sending a first registration request message to an access and mobility management network element, wherein the first registration request message is used by a terminal device to request to register toto a network over a first 3GPP access;
> generating a first key, wherein the first key is a key used for communication between the terminal device and the first access network device, and the first access network device is used for the first 3GPP access;
> sending a second registration request message to the access and mobility management network element, wherein the second registration request message is used by the terminal device to request to register to the network over a second 3GPP access; and
> generating a second key, wherein the second key is a key used for communication between the terminal device and the second access network device, the second access network device is used for the second 3GPP access, and the first key is different from the second key.

17. The method according to claim 16, wherein the first registration request message and/or the second registration request message comprise/comprises indication information, and the indication information indicates that the terminal device is to be connected to the network over two 3GPP accesses.

18. The method according to claim 16 or 17, wherein generating the first key comprises:

> generating the first key based on a first access type distinguisher corresponding to the first 3GPP access; and
> generating the second key comprises:
> generating the second key based on a second access type distinguisher corresponding to the second 3GPP access, wherein the first access type distinguisher is different from the second access type distinguisher.

19. The method according to claim 18, wherein before generating the first key, the method further comprises:

> determining the first access type distinguisher for the first 3GPP access, wherein the first access type distinguisher is one distinguisher in a dual-3GPP access type distinguisher; and
> before generating the second key, the method further comprises:

determining the second access type distinguisher for the second 3GPP access, wherein the second access type distinguisher is another distinguisher in the dual-3GPP access type distinguisher.

20. The method according to claim 19, wherein the second access type distinguisher is an unused distinguisher in the dual-3GPP access type distinguisher.

21. The method according to any one of claims 18 to 20, further comprising:

receiving a first registration accept message from the access and mobility management network element, wherein the first registration accept message comprises the first access type distinguisher; and/or receiving a second registration accept message from the access and mobility management network element, wherein the first registration accept message comprises the second access type distinguisher; or receiving a first access stratum AS security mode command from the first access network device, wherein the first AS security mode command comprises the first access type distinguisher; and/or receiving a second AS security mode command from the second access network device, wherein the second AS security mode command comprises the second access type distinguisher.

22. The method according to any one of claims 18 to 21, wherein a first bearer parameter comprises the first access type distinguisher, and a second bearer parameter comprises the second access type distinguisher; and
the method further comprises:

performing security protection on first NAS signaling by using the NAS security protection key and the first bearer parameter, wherein the first NAS signaling corresponds to the first 3GPP access; and
performing security protection on second NAS signaling by using the NAS security protection key and the second bearer parameter, wherein the second NAS signaling corresponds to the second 3GPP access.

23. The method according to claim 16 or 17, wherein generating the first key comprises:

generating the first key based on a third access type distinguisher and an identifier of the first 3GPP access, wherein the third access type distinguisher indicates that an access type is 3GPP access; and
generating the second key comprises:
generating the second key based on the third access type distinguisher and an identifier of the second 3GPP access, wherein the identifier of the first 3GPP access is different from the identifier of the second 3GPP access.

24. The method according to claim 23, wherein before generating the first key, the method further comprises:

determining the identifier of the first 3GPP access for the first 3GPP access; and
before generating the second key, the method further comprises:
determining the identifier of the second 3GPP access for the second 3GPP access.

25. The method according to claim 23 or 24, further comprising:

receiving a first registration accept message from the access and mobility management network element, wherein the first registration accept message comprises the identifier of the first 3GPP access; and/or receiving a second registration accept message sent from the access and mobility management network element, wherein the second registration accept message comprises the identifier of the second 3GPP access; or
receiving a first AS security mode command from the first access network device, wherein the first AS security mode command comprises the identifier of the first 3GPP access; and/or receiving a second AS security mode command from the second access network device, wherein the second AS security mode command comprises the identifier of the second 3GPP access.

26. The method according to claim 23 or 24, wherein the first registration request message comprises the identifier of the first 3GPP access, and the second registration request message comprises the identifier of the second 3GPP access.

27. The method according to any one of claims 23 to 26, wherein a first bearer parameter corresponds to the identifier of the first 3GPP access, and a second bearer parameter corresponds to the identifier of the second 3GPP access; and
the method further comprises:

performing security protection on first NAS signaling by using a NAS security protection key and the first bearer parameter, wherein the first NAS signaling corresponds to the first 3GPP access; and
performing security protection on second NAS signaling by using the NAS security protection key and the second bearer parameter, wherein the second NAS signaling corresponds to the second 3GPP access.

28. The method according to claim 16 or 17, wherein generating the first key comprises:

generating the first key based on a first value of an uplink NAS counter; and
generating the second key comprises:
generating the second key based on a second value of the uplink NAS counter, wherein the first 3GPP access and the second 3GPP access share the uplink NAS counter, and the first value is different from the second value.

29. A communication apparatus, comprising a unit or a module configured to perform the method according to any one of claims 1 to 15, or comprising a unit or a module configured to perform the method according to any one of claims 16 to 28.

30. A communication apparatus, comprising one or more processors and one or more memories, wherein the one or more memories store one or more programs, and when the program is executed by the one or more processors, the apparatus is caused to perform the method according to any one of claims 1 to 15 or the method according to any one of claims 16 to 28.

31. A chip system, wherein the chip system comprises at least one chip and a memory, and the at least one chip is configured to read and execute a program stored in the memory, to implement the method according to any one of claims 1 to 15 or the method according to any one of claims 16 to 28.

32. A readable storage medium, wherein the readable storage medium comprises a program, and when the program is run on an apparatus, the apparatus is caused to perform the method according to any one of claims 1 to 15 or the method according to any one of claims 16 to 28.

33. A communication system, comprising an access and mobility management network element, a first access network device, and a second access network device, wherein

the access and mobility management network element is configured to perform the method according to any one of claims 1 to 15;
the first access network device is configured to receive a first key; and
the second access network device is configured to receive a second key.

34. The communication system according to claim 33, wherein the communication system further comprises a terminal device, and the terminal device is configured to perform the method according to any one of claims 16 to 28.

35. A computer program product, wherein the computer program product comprises a program or instructions, and when the program or the instructions are executed by an apparatus, the apparatus is caused to perform the method according to any one of claims 1 to 15 or the method according to any one of claims 16 to 28.

FIG. 1

FIG. 2

Count          Direction
(Count)        (Direction)
        Bearer          Length
        (Bearer)        (Length)

Key                 ┌─────────────────────┐
(Key)               │  Encryption algorithm │
                    │         NEA           │
                    └─────────────────────┘

Key stream block
(Key stream block)

Plaintext
(Plaintext         ──────→ ⊕ ──────→    Ciphertext
block)                                  (Ciphertext block)

Sender
(Sender)

Count          Direction
(Count)        (Direction)
        Bearer          Length
        (Bearer)        (Length)

Key                 ┌─────────────────────┐
(Key)               │  Encryption algorithm │
                    │         NEA           │
                    └─────────────────────┘

Key stream block
(Key stream block)

                   ──────→ ⊕ ──────→    Plaintext
                                        (Plaintext
                                        block)

Receiver
(Sender)

FIG. 3A

Count          Direction
(Count)        (Direction)
        Message         Bearer
        (Message)       (Bearer)

Key                 ┌──────────────────────────────┐
(Key)               │ Integrity protection algorithm │
                    │             NIA                │
                    └──────────────────────────────┘

Message
authentication code
(MAC-I/NAS-MAC)

Sender
(Sender)

Count          Direction
(Count)        (Direction)
        Message         Bearer
        (Message)       (Bearer)

Key                 ┌──────────────────────────────┐
(Key)               │ Integrity protection algorithm │
                    │             NIA                │
                    └──────────────────────────────┘

Expected message
authentication code
(XMAC-I/XNAS-MAC)

Receiver
(Sender)

FIG. 3B

FIG. 4

FIG. 5

FIG. 6

FIG. 7

FIG. 8

FIG. 9

Communication apparatus 1000

Processor 1010

Interface circuit 1020

Memory 1030

FIG. 10

## INTERNATIONAL SEARCH REPORT

| International application No. |
| --- |
| **PCT/CN2024/119216** |

**A. CLASSIFICATION OF SUBJECT MATTER**

H04W 12/041(2021.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, CNKI, VEN, DWPI, ENTXTC: 多, 两, 二, 3gpp, 接入, 方式, 架构, 相同, 注册, 密码, 密钥, 推导, 推算, 推演, 演算, 预测, 估计, AMF, 隔离, access, key, multiple, second, two, architecture, same, registration, deriv+, deduct+, isolation

**C. DOCUMENTS CONSIDERED TO BE RELEVANT**

| Category* | Citation of document, with indication, where appropriate, of the relevant passages | Relevant to claim No. |
| --- | --- | --- |
| A | CN 111328455 A (MEDIATEK SINGAPORE PTE. LTD.) 23 June 2020 (2020-06-23) description, paragraphs 22-49 | 1-35 |
| A | CN 114788322 A (VIVO COMMUNICATION TECHNOLOGY CO., LTD.) 22 July 2022 (2022-07-22) entire document | 1-35 |
| A | WO 2022067827 A1 (HUAWEI TECHNOLOGIES CO., LTD.) 07 April 2022 (2022-04-07) entire document | 1-35 |
| A | THALES et al. "Use Case on supplementary downlink data via a second 3GPP network" *3GPP TSG-SA WG1 Meeting #102, S1-231706*, 30 May 2023 (2023-05-30), entire document | 1-35 |
| A | CN 111447675 A (HUAWEI TECHNOLOGIES CO., LTD.) 24 July 2020 (2020-07-24) entire document | 1-35 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 December 2024** | **23 December 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/119216**

| Patent document cited in search report | | | Publication date (day/month/year) | Patent family member(s) | | | Publication date (day/month/year) |
|---|---|---|---|---|---|---|---|
| CN | 111328455 | A | 23 June 2020 | TW | 202027454 | A | 16 July 2020 |
| | | | | US | 2020128402 | A1 | 23 April 2020 |
| | | | | WO | 2020078416 | A1 | 23 April 2020 |
| | | | | US | 2021092598 | A1 | 25 March 2021 |
| CN | 114788322 | A | 22 July 2022 | WO | 2021232430 | A1 | 25 November 2021 |
| | | | | IN | 202227074213 | A | 03 February 2023 |
| | | | | EP | 4154507 | A1 | 29 March 2023 |
| WO | 2022067827 | A1 | 07 April 2022 | EP | 4207846 | A1 | 05 July 2023 |
| | | | | US | 2023239689 | A1 | 27 July 2023 |
| | | | | IN | 202347025914 | A | 05 May 2023 |
| | | | | CN | 116325840 | A | 23 June 2023 |
| CN | 111447675 | A | 24 July 2020 | None | | | |

Form PCT/ISA/210 (patent family annex) (July 2022)

**REFERENCES CITED IN THE DESCRIPTION**

**Patent documents cited in the description**

- CN 202311260044